# EUROPEAN PATENT APPLICATION

(11) **EP 4 465 724 A1**
(43) Date of publication of application: **20.11.2024**
(21) Application number: 23740003.1
(22) Date of filing: 10.01.2023
(51) Int. Cl.: H04W 72/04

(54) **UCI TRANSMISSION METHOD AND APPARATUS, TERMINAL, NETWORK DEVICE, AND STORAGE MEDIUM**

(30) Priority: 11.01.2022 CN 202210028088
(71) Applicant: Datang Mobile Communications Equipment Co., Ltd., Beijing 100085 (CN)
(72) Inventor: GAO, Xuejuan, Beijing 100085 (CN); SI, Qianqian, Beijing 100085 (CN)
(74) Representative: Studio Torta S.p.A.
(86) International application number: PCT/CN2023/071528
(87) International publication number: WO 2023/134661

(57) **Abstract**

Embodiments of the present disclosure provide a UCI transmission method and apparatus, a terminal, a network device, and a storage medium. The method is applied to a terminal and comprises: when a time domain resource of a PUCCH carrying a first UCI overlaps with time domain resources of multiple PUSCHs and when the multiple PUSCHs comprise a PUSCH carrying a second UCI, preferentially selecting a PUSCH that does not carry the second UCI from the multiple PUSCHs, and transmitting the first UCI on the selected PUSCH that does not carry the second UCI; or selecting a target PUSCH used for carrying the first UCI from the multiple PUSCHs, and determining a corresponding UCI transmission mode according to UCI information carried by the target PUSCH. Therefore, a specific UCI transmission method is provided for the problem that no clear transmission scheme is provided for relevant scenes, thereby ensuring the normal operation of a system.

## Description

### CROSS-REFERENCES TO RELATED APPLICATIONS

The present application claims priority to Chinese patent application No. 202210028088.2 filed on January 11, 2022, entitled "UCI Transmission Method and Apparatus, Terminal, Network Device, and Storage Medium", which is hereby incorporated by reference in its entirety.

### FIELD

The present application relates to the field of radio communication, and in particular, to methods and apparatuses for uplink control information (UCI) transmission, a terminal, a network device and a storage medium.

### BACKGROUND

Uplink control information (UCI) includes hybrid automatic repeat request-ACKnowledgment (HARQ-ACK), channel state information (CSI), scheduling request (SR) and other information. UCI may be transmitted on a physical uplink control channel (PUCCH) or a physical uplink shared channel (PUSCH).

In version 16 (Release-16, Rel-16, R16) of the 5th generation new radio (5G NR) system, considering the implementation complexity, when resources of uplink channels with different priorities overlap (i.e., conflict) in time domain, the low priority channel is always dropped and only the high priority channel is transmitted.

### BRIEF SUMMARY

In response to the problems in the related art, embodiments of the present application provide methods and apparatuses for uplink control information (UCI) transmission, a terminal, a network device and a storage medium.

An embodiment of the present application provides a method for uplink control information (UCI) transmission, performed by a terminal, including:
in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and transferring the first UCI to the selected PUSCH without carrying the second UCI for transmission; or, selecting a target PUSCH for carrying the first UCI from the multiple PUSCHs, and determining a corresponding UCI transmission mode based on UCI carried on the target PUSCH,
where the PUCCH and the PUSCH carrying the second UCI have different priorities, or the first UCI includes first priority UCI and the second UCI includes second priority UCI.

In an embodiment, the method includes:
in case that time domain resources of a PUCCH carrying first UCI overlap with time domain resources of multiple PUSCHs and the multiple PUSCHs include a PUSCH carrying second UCI, selecting a PUSCH without carrying the second UCI from the multiple PUSCHs preferentially, and transmitting the first UCI on the selected PUSCH without carrying the second UCI; or, selecting a target PUSCH for carrying the first UCI from the multiple PUSCHs, and determining a corresponding UCI transmission mode based on UCI carried on the target PUSCH,
where the PUCCH and the PUSCH carrying the second UCI have different priorities, or the first UCI includes the first priority UCI and the second UCI includes the second priority UCI.

In an embodiment, selecting the PUSCH without carrying the second UCI preferentially includes any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

In an embodiment, determining the corresponding UCI transmission mode based on UCI carried on the target PUSCH includes:
transferring the first UCI to the target PUSCH for transmission in case that the target PUSCH does not carry the second UCI; or,
performing transmission according to any of the following in case that the target PUSCH carries the second UCI:
   dropping the second UCI and transferring the first UCI to the target PUSCH for transmission; or,
   dropping a part of UCI in the second UCI, transferring the first UCI to the target PUSCH, and transmitting the first UCI together with remaining UCI in the second UCI; or,
   dropping a part of UCI in the first UCI, transferring remaining UCI in the first UCI to the target PUSCH, and transmitting the second UCI together with the remaining UCI in the first UCI; or,
   transferring the first UCI to the target PUSCH and transmitting the second UCI together with the first UCI; or,
   dropping the target PUSCH or dropping the PUCCH.

In an embodiment, determining the corresponding UCI transmission mode based on UCI carried on the target PUSCH includes:
transmitting the first UCI on the target PUSCH in case that the target PUSCH does not carry the second UCI; or,
performing transmission according to any of the following in case that the target PUSCH carries the second UCI:
   dropping the second UCI and transmitting the first UCI on the target PUSCH; or,
   dropping a part of UCI in the second UCI, and transmitting the first UCI together with remaining UCI in the second UCI on the target PUSCH; or,
   dropping a part of UCI in the first UCI, and transmitting the second UCI together with the remaining UCI in the first UCI on the target PUSCH; or,
   transmitting the first UCI and the second UCI on the target PUSCH; or,
   dropping the target PUSCH or dropping the PUCCH.

In an embodiment, after dropping the target PUSCH, the method further includes:
dropping all other PUSCHs overlapping with the PUCCH in time domain resources, and transmitting the PUCCH carrying the first UCI; or,
selecting another target PUSCH for carrying the first UCI from remaining PUSCHs overlapping with the PUCCH in time domain resources, and determining the corresponding UCI transmission mode based on UCI carried on the another target PUSCH.

In an embodiment, the first UCI and the second UCI satisfy any or any combination of the following conditions:
UCI included in the first UCI and UCI included in the second UCI include UCI that does not support multiplexing transmission; or,
the first UCI includes hybrid automatic repeat request-ACKnowledgment (HARQ-ACK) and/or channel state information (CSI), and the second UCI includes HARQ-ACK and/or CSI.

In an embodiment, in case that UCIs carried on the PUCCH have different priorities, a priority of the PUCCH is high priority or a third priority; or,
in case that UCIs carried on the PUSCH have different priorities, a priority of the PUSCH is high priority or a third priority,
where the third priority is a priority type other than high priority and low priority.

In an embodiment, the multiple PUSCHs are PUSCHs unable to be transmitted simultaneously with the PUCCH.

An embodiment of the present application further provides a method for uplink control information (UCI) transmission, performed by a network device, including:
in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and receiving the first UCI on the selected PUSCH without carrying the second UCI; or, selecting a target PUSCH for carrying the first UCI from the multiple PUSCHs, and determining a corresponding UCI reception mode based on UCI carried on the target PUSCH,
where the PUCCH and the PUSCH carrying the second UCI have different priorities, or the first UCI includes first priority UCI and the second UCI includes second priority UCI.

In an embodiment, selecting the PUSCH without carrying the second UCI preferentially includes any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

In an embodiment, determining the corresponding UCI reception mode based on UCI carried on the target PUSCH includes:
receiving the first UCI on the target PUSCH in case that the target PUSCH does not carry the second UCI; or,
performing reception according to any of the following in case that the target PUSCH carries the second UCI:
   determining that the second UCI is dropped and receiving the first UCI on the target PUSCH; or,
   determining that a part of UCI in the second UCI is dropped and receiving the first UCI together with remaining UCI in the second UCI on the target PUSCH; or,
   determining that a part of UCI in the first UCI is dropped and receiving the second UCI together with remaining UCI in the first UCI on the target PUSCH; or
   receiving the first UCI and the second UCI on the target PUSCH; or,
   determining that the target PUSCH is dropped; or
   determining that the PUCCH is dropped.

In an embodiment, after determining that the target PUSCH is dropped, the method further includes:
determining that all other PUSCHs overlapping with the PUCCH in time domain resources are dropped and receiving the PUCCH carrying the first UCI; or,
selecting another target PUSCH for carrying the first UCI from remaining PUSCHs overlapping with the PUCCH in time domain resources, and determining the corresponding UCI reception mode based on UCI carried on the another target PUSCH.

In an embodiment, the first UCI and the second UCI satisfy any or any combination of the following conditions:
UCI included in the first UCI and UCI included in the second UCI include UCI that does not support multiplexing transmission; or,
the first UCI includes hybrid automatic repeat request-ACKnowledgment (HARQ-ACK) and/or channel state information (CSI), and the second UCI includes HARQ-ACK and/or CSI.

In an embodiment, in case that UCIs carried on the PUCCH have different priorities, a priority of the PUCCH is high priority or a third priority; or,
in case that UCIs carried on the PUSCH have different priorities, a priority of the PUSCH is high priority or a third priority,
where the third priority is a priority type other than high priority and low priority.

In an embodiment, the multiple PUSCHs are PUSCHs unable to be transmitted simultaneously with the PUCCH.

An embodiment of the present application further provides a terminal, including a memory, a transceiver and a processor,
where the memory is used for storing a computer program, the transceiver is used for transmitting and receiving data under control of the processor, and the processor is used for reading the computer program in the memory and performing the following operations of:
in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and transferring the first UCI to the selected PUSCH without carrying the second UCI for transmission; or, selecting a target PUSCH for carrying the first UCI from the multiple PUSCHs, and determining a corresponding UCI transmission mode based on UCI carried on the target PUSCH,
where the PUCCH and the PUSCH carrying the second UCI have different priorities, or the first UCI includes first priority UCI and the second UCI includes second priority UCI.

In an embodiment, the operations include:
in case that time domain resources of a PUCCH carrying first UCI overlap with time domain resources of multiple PUSCHs and the multiple PUSCHs include a PUSCH carrying second UCI, selecting a PUSCH without carrying the second UCI from the multiple PUSCHs preferentially, and transmitting the first UCI on the selected PUSCH without carrying the second UCI; or, selecting a target PUSCH for carrying the first UCI from the multiple PUSCHs, and determining a corresponding UCI transmission mode based on UCI carried on the target PUSCH,
where the PUCCH and the PUSCH carrying the second UCI have different priorities, or the first UCI includes first priority UCI and the second UCI includes second priority UCI.

In an embodiment, selecting the PUSCH without carrying the second UCI preferentially includes any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

In an embodiment, determining the corresponding UCI transmission mode based on UCI carried on the target PUSCH includes:
transferring the first UCI to the target PUSCH for transmission in case that the target PUSCH does not carry the second UCI; or,
performing transmission according to any of the following in case that the target PUSCH carries the second UCI:
   dropping the second UCI and transferring the first UCI to the target PUSCH for transmission; or,
   dropping a part of UCI in the second UCI, transferring the first UCI to the target PUSCH, and transmitting the first UCI together with remaining UCI in the second UCI; or,
   dropping a part of UCI in the first UCI, transferring remaining UCI in the first UCI to the target PUSCH, and transmitting the second UCI together with the remaining UCI in the first UCI; or,
   transferring the first UCI to the target PUSCH and transmitting the second UCI together with the first UCI; or,
   dropping the target PUSCH or dropping the PUCCH.

In an embodiment, determining the corresponding UCI transmission mode based on UCI carried on the target PUSCH includes:
transmitting the first UCI on the target PUSCH in case that the target PUSCH does not carry the second UCI; or,
performing transmission according to any of the following in case that the target PUSCH carries the second UCI:
   dropping the second UCI and transmitting the first UCI on the target PUSCH; or,
   dropping a part of UCI in the second UCI, and transmitting the first UCI together with remaining UCI in the second UCI on the target PUSCH; or,
   dropping a part of UCI in the first UCI, and transmitting the second UCI together with the remaining UCI in the first UCI on the target PUSCH; or,
   transmitting the first UCI and the second UCI on the target PUSCH; or,
   dropping the target PUSCH or dropping the PUCCH.

In an embodiment, after dropping the target PUSCH, the operations further include:
dropping all other PUSCHs overlapping with the PUCCH in time domain resources, and transmitting the PUCCH carrying the first UCI; or,
selecting another target PUSCH for carrying the first UCI from remaining PUSCHs overlapping with the PUCCH in time domain resources, and determining the corresponding UCI transmission mode based on UCI carried on the another target PUSCH.

In an embodiment, the first UCI and the second UCI satisfy any or any combination of the following conditions:
UCI included in the first UCI and UCI included in the second UCI include UCI that does not support multiplexing transmission; or,
the first UCI includes hybrid automatic repeat request-ACKnowledgment (HARQ-ACK) and/or channel state information (CSI), and the second UCI includes HARQ-ACK and/or CSI.

In an embodiment, in case that UCIs carried on the PUCCH have different priorities, a priority of the PUCCH is high priority or a third priority; or,
in case that UCIs carried on the PUSCH have different priorities, a priority of the PUSCH is high priority or a third priority,
where the third priority is a priority type other than high priority and low priority.

In an embodiment, the multiple PUSCHs are PUSCHs unable to be transmitted simultaneously with the PUCCH.

An embodiment of the present application further provides a network device, including a memory, a transceiver and a processor,
where the memory is used for storing a computer program, the transceiver is used for transmitting and receiving data under control of the processor, and the processor is used for reading the computer program in the memory and performing the following operations of:
in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and receiving the first UCI on the selected PUSCH without carrying the second UCI; or, selecting a target PUSCH for carrying the first UCI from the multiple PUSCHs, and determining a corresponding UCI reception mode based on UCI carried on the target PUSCH,
where the PUCCH and the PUSCH carrying the second UCI have different priorities, or the first UCI includes first priority UCI and the second UCI includes second priority UCI.

In an embodiment, selecting the PUSCH without carrying the second UCI preferentially includes any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

In an embodiment, determining the corresponding UCI reception mode based on UCI carried on the target PUSCH includes:
receiving the first UCI on the target PUSCH in case that the target PUSCH does not carry the second UCI; or,
performing reception according to any of the following in case that the target PUSCH carries the second UCI:
   determining that the second UCI is dropped and receiving the first UCI on the target PUSCH; or,
   determining that a part of UCI in the second UCI is dropped and receiving the first UCI together with remaining UCI in the second UCI on the target PUSCH; or,
   determining that a part of UCI in the first UCI is dropped and receiving the second UCI together with remaining UCI in the first UCI on the target PUSCH; or
   receiving the first UCI and the second UCI on the target PUSCH; or,
   determining that the target PUSCH is dropped; or,
   determining that the PUCCH is dropped.

In an embodiment, after determining that the target PUSCH is dropped, the operations further include:
determining that all other PUSCHs overlapping with the PUCCH in time domain resources are dropped and receiving the PUCCH carrying the first UCI; or,
selecting another target PUSCH for carrying the first UCI from remaining PUSCHs overlapping with the PUCCH in time domain resources, and determining the corresponding UCI reception mode based on UCI carried on the another target PUSCH.

In an embodiment, the first UCI and the second UCI satisfy any or any combination of the following conditions:
UCI included in the first UCI and UCI included in the second UCI include UCI that does not support multiplexing transmission; or,
the first UCI includes hybrid automatic repeat request-ACKnowledgment (HARQ-ACK) and/or channel state information (CSI), and the second UCI includes HARQ-ACK and/or CSI.

In an embodiment, in case that UCIs carried on the PUCCH have different priorities, a priority of the PUCCH is high priority or a third priority; or,
in case that UCIs carried on the PUSCH have different priorities, a priority of the PUSCH is high priority or a third priority,
where the third priority is a priority type other than high priority and low priority.

In an embodiment, the multiple PUSCHs are PUSCHs unable to be transmitted simultaneously with the PUCCH.

An embodiment of the present application further provides an apparatus for uplink control information (UCI) transmission, applied to a terminal, including:
a transmission unit, used for in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and transferring the first UCI to the selected PUSCH without carrying the second UCI for transmission; or, selecting a target PUSCH for carrying the first UCI from the multiple PUSCHs, and determining a corresponding UCI transmission mode based on UCI carried on the target PUSCH,
where the PUCCH and the PUSCH carrying the second UCI have different priorities, or the first UCI includes first priority UCI and the second UCI includes second priority UCI.

In an embodiment, the apparatus includes:
a transmission unit, used for in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and transmitting the first UCI on the selected PUSCH without carrying the second UCI; or, selecting a target PUSCH for carrying the first UCI from the multiple PUSCHs, and determining a corresponding UCI transmission mode based on UCI carried on the target PUSCH,
where the PUCCH and the PUSCH carrying the second UCI have different priorities, or the first UCI includes first priority UCI and the second UCI includes second priority UCI.

An embodiment of the present application further provides an apparatus for uplink control information (UCI) transmission, applied to a network device, including:
a reception unit, used for in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and receiving the first UCI on the selected PUSCH without carrying the second UCI; or, selecting a target PUSCH for carrying the first UCI from the multiple PUSCHs, and determining a corresponding UCI reception mode based on UCI carried on the target PUSCH,
where the PUCCH and the PUSCH carrying the second UCI have different priorities, or the first UCI includes first priority UCI and the second UCI includes second priority UCI.

An embodiment of the present application further provides a computer readable storage medium storing a computer program that causes a computer to perform steps of the method for UCI transmission applied to the terminal or the network device.

In the methods and apparatuses for UCI transmission, the terminal, the network device and the storage medium provided by the embodiments of the present application, in case that time domain resources of the PUCCH carrying first UCI overlap with time domain resources of multiple PUSCHs and the multiple PUSCHs include the PUSCH carrying second UCI, the terminal selects the PUSCH without carrying the second UCI from the multiple PUSCHs preferentially and transmits the first UCI on the selected PUSCH without carrying the second UCI, to avoid possible problem of transmission failure caused by transmitting UCI with different priorities on the same PUSCH; or, the terminal determines a corresponding UCI transmission mode based on UCI carried on the target PUSCH selected from the multiple PUSCHs, to provide a specific method for UCI transmission for the problem that there is no clear transmission scheme in relevant scenarios, ensuring the normal operation of the system.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.
FIG. 1 is a first schematic flowchart of a method for uplink control information (UCI) transmission according to an embodiment of the present application;
FIG. 2 is a second schematic flowchart of a method for UCI transmission according to an embodiment of the present application;
FIG. 3 is a schematic diagram showing an overlapping of resources of a physical uplink control channel (PUCCH) and a physical uplink shared channel (PUSCH) in time domain according to an embodiment of the present application;
FIG. 4 is a first schematic implementation diagram of a method for UCI transmission according to an embodiment of the present application;
FIG. 5 is a schematic diagram of PUCCH and a selected PUSCH according to an embodiment of the present application;
FIG. 6 is a second schematic implementation diagram of a method for UCI transmission according to an embodiment of the present application;
FIG. 7 is a third schematic implementation diagram of a method for UCI transmission according to an embodiment of the present application;
FIG. 8 is a fourth schematic implementation diagram of a method for UCI transmission according to an embodiment of the present application;
FIG. 9 is a fifth schematic implementation diagram of a method for UCI transmission according to an embodiment of the present application;
FIG. 10 is a sixth schematic implementation diagram of a method for UCI transmission according to an embodiment of the present application;
FIG. 11 is a seventh schematic implementation diagram of a method for UCI transmission according to an embodiment of the present application;
FIG. 12 is an eighth schematic implementation diagram of a method for UCI transmission according to an embodiment of the present application;
FIG. 13 is a ninth schematic implementation diagram of a method for UCI transmission according to an embodiment of the present application;
FIG. 14 is a tenth schematic implementation diagram of a method for UCI transmission according to an embodiment of the present application;
FIG. 15 is an eleventh schematic implementation diagram of a method for UCI transmission according to an embodiment of the present application;
FIG. 16 is a schematic structural diagram of a terminal according to an embodiment of the present application;
FIG. 17 is a schematic structural diagram of a network device according to an embodiment of the present application;
FIG. 18 is a first schematic structural diagram of an apparatus for UCI transmission according to an embodiment of the present application; and
FIG. 19 is a second schematic structural diagram of an apparatus for UCI transmission according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

In version 16 (Release-16, Rel-16, R16) of the 5th generation new radio (5G NR) system, considering the implementation complexity, when resources of uplink channels with different priorities overlap (i.e., conflict) in time domain, the low priority channel is always dropped and only the high priority channel is transmitted. In order to avoid downlink retransmission caused by dropping hybrid automatic repeat request-ACKnowledgment (HARQ-ACK) carried on a low priority channel, the 3rd generation partnership project (3GPP) standards meeting discussed that multiplexing between uplink channels with different priorities may be supported.

When dealing with the conflict of the uplink channels with different priorities, there may be a scenario in which a physical uplink control channel (PUCCH) and a physical uplink shared channel (PUSCH) with different priorities conflict and a parallel transmission of PUCCH and PUSCH is not supported. How to provide a solution for uplink control information (UCI) transmission is an important issue that needs to be solved urgently in this industry.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to facilitate a clearer understanding for the embodiments of the present application, some contents related to the embodiments of the present application are first introduced.

### (1) Uplink control information (UCI) transmission in the 5th generation new radio (5G NR)

UCI includes hybrid automatic repeat request-ACKnowledgment (HARQ-ACK), channel state information (CSI), scheduling request (SR), and other information. UCI may be transmitted on a physical uplink control channel (PUCCH) and a physical uplink shared channel (PUSCH). HARQ-ACK is a collective term for ACKnowledgment (ACK) and Non-ACKnowledgment (NACK), which is used for providing feedback for a physical downlink shared channel (PDSCH) or a physical downlink control channel (PDCCH) that requires HARQ-ACK feedback, such as a PDCCH indicating to release semi-persistent scheduling (SPS) resource (also known as SPS PDSCH release) or a PDCCH indicating secondary cell dormancy (SCell dormancy), to notify a base station whether the PDSCH or the PDCCH that requires HARQ-ACK feedback is correctly received. CSI is used for feeding back a channel quality of downlink transmission, to assist the base station in performing better downlink scheduling, for example, based on the CSI, modulation and coding scheme (MCS) is selected, an appropriate resource block (RB) resource is configured, etc. SR is used for requesting the base station to allocate PUSCH transmission resources for uplink service transmission when the terminal has an uplink service that needs to be transmitted.

HARQ-ACK may provide feedback based on different time units, where the time unit may be a slot or a sub-slot. A sub-slot is obtained by dividing a slot into multiple sub-units based on a predetermined sub-slot length. For example, a slot including 14 symbols may be divided into 2 sub-slots if a sub-slot length is 7 symbols. For another example, a slot including 14 symbols may be divided into 7 sub-slots if a sub-slot length is 2 symbols. The slot in which the PUCCH transmission carrying HARQ-ACK is located is determined based on a feedback sequence *n+k1* when feedback is performed based on slot, where *n* is a reference uplink slot corresponding to a slot in which a downlink transmission that requires HARQ-ACK feedback (including PDSCH and PDCCH that requires HARQ-ACK feedback) is located, and *k1* is a slot offset value between the reference uplink slot and a target slot for HARQ-ACK transmission (that is, the unit of *k1* is slot). The sub-slot in which the PUCCH transmission carrying HARQ-ACK is located is determined based on a feedback sequence *n+k1* when feedback is performed based on sub-slot, where *n* is a reference uplink sub-slot corresponding to a slot in which a downlink transmission that requires HARQ-ACK feedback (including PDSCH and PDCCH that requires HARQ-ACK feedback) is located, and *k1* is a sub-slot offset value between the reference uplink sub-slot and a target sub-slot for HARQ-ACK transmission (that is, the unit of *k1* is sub-slot). The resources of PUCCH carrying HARQ-ACK do not span the time unit used for HARQ-ACK feedback, that is, when the transmission is performed based on sub-slot, the PUCCH carrying HARQ-ACK does not exceed the boundary of the sub-slot, that is, no transmission across multiple sub slots is performed.

### (2) Overlapping between PUCCH and PUCCH/PUSCH with the same priority

NR Rel-16 does not support parallel transmission of PUCCH and PUSCH at the same timing, whether on the same carrier or different carriers. When resources of PUCCH and PUSCH (without special explanation, generally referring to PUCCH and PUSCH that do not use repetition) overlap in time domain, the UCI (generally referring to HARQ-ACK and CSI) may be transferred from the PUCCH to the PUSCH for transmission under a condition of meeting a predetermined timeline. If there is an SR, the SR is dropped rather than transmitted on the PUSCH. If there are multiple PUSCHs that overlap with PUCCH, one PUSCH is selected according to the following rules: a PUSCH carrying aperiodic CSI (A-CSI) is preferentially selected; if there are both PUSCH with PDCCH scheduling (dynamic granted PUSCH, DG PUSCH) and PUSCH without PDCCH scheduling (configured granted PUSCH (CG PUSCH), semi-persistent CSI, (SP-CSI) PUSCH, etc.), DG PUSCH is preferentially selected. After selecting according to the above rules, if there are PUSCHs on multiple carriers, the PUSCH on the carrier with a lower carrier number is preferentially selected; and if there are multiple PUSCHs that do not overlap in time domain on the selected carrier overlap with PUCCH, the earliest PUSCH is selected.

The definition of timeline is that if the PUCCH or PUSCH has a corresponding PDCCH, for example, the HARQ-ACK carried on the PUCCH is the HARQ-ACK of a PDSCH with PDCCH scheduling or the HARQ-ACK of the PDCCH indicating the release of downlink SPS resources, the PDCCH that schedules the PDSCH or the PDCCH that indicates the release of downlink SPS resources is the PDCCH corresponding to the PUCCH, or it may also be called the PDCCH that schedules the PUCCH, and the PDCCH that schedules the PUSCH is the PDCCH corresponding to the PUSCH. The first symbol of the channel with the earliest starting time between the overlapped PUCCH and PUSCH is taken as the target symbol, and if there are multiple channels with the same starting time, a channel is selected randomly among them, and the first symbol of the selected channel is taken as the target symbol. The target symbol should satisfy the following timeline to be used in multiplex transmission, otherwise it is considered to be a scheduling error.

Timeline1: the target symbol is not earlier than the first symbol (including the cyclic prefix (CP)) after the T1mux time after the last symbol of any one of PDSCH that needs to perform HARQ-ACK feedback on PUCCH or SPS PDSCH release, that is, the time interval between the target symbol and the last symbol of any one of the above PDSCH or SPS PDSCH release is not less than T1mux time. T1mux is related to the processing delay of PDSCH and may be calculated according to the predetermined formula and related parameters. The purpose of this timeline is to ensure that the acquisition and preparation of HARQ-ACK may be completed before the transmission of the finally determined channel for transmitting HARQ-ACK starts.

Timeline2: the target symbol is not earlier than the first symbol (including the CP) after the T2mux time after the last symbol of any PDCCH for scheduling PDSCH (if there is) and PUSCH (if there is) (including the PDCCH that requires HARQ-ACK feedback), that is, the time interval between the target symbol and the last symbol of any of the above PDCCH is not less than the T2mux time. T2mux is related to the processing delay of PUSCH and may be calculated according to the predetermined formula and related parameters. The purpose of this timeline is to ensure that when UCI needs to be transferred to PUSCH for transmission, the PDCCH scheduling PUSCH may be obtained before PUCCH starts preparation. As such, it may be determined that UCI transmission does not need to be prepared on PUCCH, and the transmission preparation including UCI may be completed before PUSCH transmission, that is, the acquisition and multiplexing processing of UCI may be completed, and the preparation (such as coding, modulation, scrambling and other operations) of the transport block (TB) may be completed. If there is multiplexing between multiple PUCCHs, T2mux is used to simulate the preparation time for CSI and SR multiplexing with HARQ-ACK.

If the HARQ-ACK carried on the PUCCH does not have a corresponding PDCCH (that is, the HARQ-ACK is the HARQ-ACK of the SPS PDSCH), there is no PDCCH for scheduling the PDSCH at this time. If there is no PUSCH or the PUSCH does not have a corresponding PDCCH, only T1mux needs to be checked and T2mux does not need to be checked. If the PUCCH carries CSI and/or SR, T1mux does not need to be checked since there is no corresponding PDSCH; and further, T2mux also does not need to be checked if there is no PUSCH or the PUSCH does not have a corresponding PDCCH.

If PUCCH and PUCCH overlap, at least one PUCCH is repeatedly transmitted (that is, UCI is transmitted repeatedly over each slot of occupied multiple slots, which is also known as multi-slot transmission), then only for the overlapping repetition, high priority is transmitted and low priority is dropped, without affecting the non-overlapping repetition. If PUCCH overlaps with repetition PUSCH, when PUSCH adopts repetition transmission based on slot (R15 repetition transmission, or R16 repetition type A), the UCI carried on the PUCCH is transferred to the slot where one or more PUSCHs that overlap with the PUCCH are located for transmission. When PUSCH adopts R16 repetition type B, the UCI carried on the PUCCH is transferred to the earliest actual repetition PUSCH that overlaps with the PUCCH and includes more than 1 symbol for transmission, where actual repetition PUSCH is the repetition PUSCH obtained after segmenting based on unavailable symbol, downlink (DL) symbol, slot boundary, etc. The above one or more repetition PUSCHs overlapping with the PUCCH need to satisfy the multiplexing timeline. If repetition PUCCH overlaps with repetition PUSCH or non-repetition PUSCH, the PUSCH overlapping with the PUCCH is dropped, to ensure that the transmission of repetition PUCCH is not interrupted.

In R17, based on the capability of the terminal (also called user equipment (UE)), it may support parallel transmission of PUCCH and PUSCH on different carriers in case of inter-band carrier aggregation (CA), but for case of on the same carrier or intra-band CA, parallel transmission is not supported yet.

### (3) Transmission of channels with different physical layer priorities

A UE may support different service types, such as enhanced mobile broadband (eMBB) service and ultra-reliable and low latency communication (URLLC) service, etc. Different service types have different requirements for reliability and transmission delay. Since URLLC service flows may occur sporadically and irregularly, if different system resources are independently reserved for different services, the overhead in system resources is large, and the resources reserved for URLLC may not be used in many cases. In order to improve system resource utilization, different services may be supported to be multiplexed and transmitted on the same resources. In order to avoid mutual influence between services, different priorities may be defined for different services to distinguish the important channel and information when resource conflicts occur.

The physical layer priorities of PUCCH and PUSCH may be obtained by default, dynamic indication of downlink control information (DCI), or semi-static configuration of radio resource control (RRC). For example, when PUCCH carries SR, its priority is determined based on the priority corresponding to the SR it carries, and the priority corresponding to each SR configuration is configured by higher layer signaling; when PUCCH carries HARQ-ACK of SPS PDSCH or carries HARQ-ACK of SPS PDSCH release, its priority is determined based on the HARQ-ACK codebook number configured for SPS PDSCH through higher layer signaling, where the HARQ-ACK codebook with number being 0 has a low priority and the HARQ-ACK codebook with number being 1 has a high priority; when the PUCCH carries CSI (including periodic CSI and SP-CSI), its priority defaults to low priority. When the DCI includes a priority indication field, the priority may be obtained based on the priority indication field in the DCI (or PDCCH, the PDCCH and DCI may be considered equivalent in the present application, where DCI is the specific format used for PDCCH transmission, and having the corresponding DCI is equivalent to having the corresponding PDCCH) corresponding to PUCCH and PUSCH, that is, a dynamic priority indication mode. For example, when the PDCCH schedules the PDSCH, the priority of the PUCCH carrying the HARQ-ACK of this PDSCH may be indicated through a priority indication field; when the PDCCH schedules the PUSCH, the priority of the scheduled PUSCH may be indicated through a priority indication field, where the PUSCH includes a PUSCH that only carries TB or a PUSCH that only carries A-CSI or a PUSCH that carries both TB and A-CSI. For the PUSCH carrying SP-CSI, its priority may be obtained based on the priority indication field in the DCI for activating the PUSCH carrying SP-CSI. If the DCI does not include a priority indication field, or the higher layer signaling does not configure a priority, the default is low priority.

Considering the implementation complexity, Rel-16 does not support multiplexing between uplink channels with different physical layer priorities. When uplink channels with different physical layer priorities collide, that is, multiple PUCCHs overlap in the time domain on the same carrier, or PUCCH and PUSCH overlap in the time domain on the same carrier or different carriers, or multiple PUSCHs overlap in the time domain on the same carrier, the low priority uplink channel is dropped and only the high priority uplink channel is transmitted. Considering that stopping the transmission of low priority uplink channel based on priority comparison requires a certain amount of additional processing time, so the timeline for stopping low priority uplink channel is further defined: the time interval between the PDCCH corresponding to the high priority uplink channel and the starting symbol of the high priority uplink channel is not less than a predetermined T time, where the original processing delay (such as T1proce, T2proce) and the additional time required for stopping (d1) are taken into account in T time. T1proce actually refers to T1 defined in the protocol, and T1 is the processing time of PDSCH defined in the protocol (including processing such as PDSCH reception and decoding, as well as preparation time of related HARQ-ACK feedback, etc.). T2proce actually refers to T2 defined in the protocol, and T2 is the processing time of PUSCH defined in the protocol (including PUSCH preparation time, etc.).

In Rel-17, considering the impact of lower system efficiency caused by always dropping low priority uplink channel, for example, always dropping low priority HARQ-ACK will result in redundant retransmission since the downlink transmission corresponding to low priority HARQ-ACK cannot obtain the feedback information in time, multiplexing transmission between uplink channels with different physical layer priorities is considered.

When there is a conflict between multiple uplink channels with different priorities, a possible way is to handle it according to the following steps.

Step 1: conflicts between uplink channels of the same priority are first solved, which include conflicts between PUCCHs and between PUCCH and PUSCH. For example, for a low priority PUCCH, a PUCCH resource may be found according to multiplexing transmission scheme between PUCCHs specified in the related art to carry the UCI on the multiple conflicting PUCCHs simultaneously, or some kind of UCI may be dropped to resolve conflict when multiplexing transmission is not supported, to obtain one or more non-overlapping low priority PUCCHs. If PUCCH conflicts with PUSCH and parallel transmission of PUCCH and PUSCH is not supported, it is needed to determine a PUSCH to carry the UCI on the PUCCH that conflicts with the PUSCH, and then the PUCCH is not transmitted, and eventually one or more low priority PUCCH/PUSCHs that do not overlap with each other are obtained. Similarly, for a high priority PUCCH, a PUCCH resource may be found according to multiplexing transmission scheme between PUCCHs specified in the related art to carry the UCI on the multiple conflicting PUCCHs simultaneously, or some kind of UCI may be dropped to resolve conflict when multiplexing transmission is not supported, to obtain one or more non-overlapping high priority PUCCHs. If PUCCH conflicts with PUSCH and parallel transmission of PUCCH and PUSCH is not supported, it is needed to determine a PUSCH to carry the UCI on the PUCCH that conflicts with the PUSCH, and then the PUCCH is not transmitted, and eventually one or more high priority PUCCH/PUSCHs that do not overlap with each other are obtained.

Step 2: since there may be overlap between high priority and low priority uplink channels, it is necessary to resolve the conflict between uplink channels with different priorities. Step 2 may be divided into step 2-1 and step 2 -2.

Step 2-1: the conflict between PUCCHs with different priorities is first solved. One or more non-overlapping PUCCHs with each other (maybe some are low priority and some are high priority, or they may all be of the same priority) may be obtained according to pre-determined multiplexing transmission scheme between different priorities (including a rule of transmitting on the same channel or dropping some kind of UCI when not supporting multiplexing).

Step 2-2: if there is still overlap between PUSCH and these obtained PUCCHs and parallel transmission of PUCCH and PUSCH is not supported, the conflict between PUCCH and PUSCH needs to be further resolved. At this time, the PUCCH and PUSCH may have the same priority or different priorities. This is because that, although the conflict between PUCCH and PUSCH of the same priority has been resolved in step 1, after the multiplexing procedure between PUCCHs with different priorities in step 2-1, there may be a new PUCCH resource corresponding to high priority UCI according to the total number of bits of high and low priority UCI multiplexed on the same channel. The new PUCCH resource may conflict with PUSCH, so multiplexing transmission between PUCCH and PUSCH should be performed to solve the conflict between PUCCH and PUSCH.

In addition, the function of whether to support multiplexing transmission between channels with different priorities may be enabled or disabled based on semi-static configuration of higher layer signaling, or may be enabled or disabled based on dynamic indication in PDCCH. The PDCCH may be a PDCCH scheduling downlink transmission, a PDCCH that requires HARQ-ACK feedback, or a PDCCH scheduling PUSCH, etc.

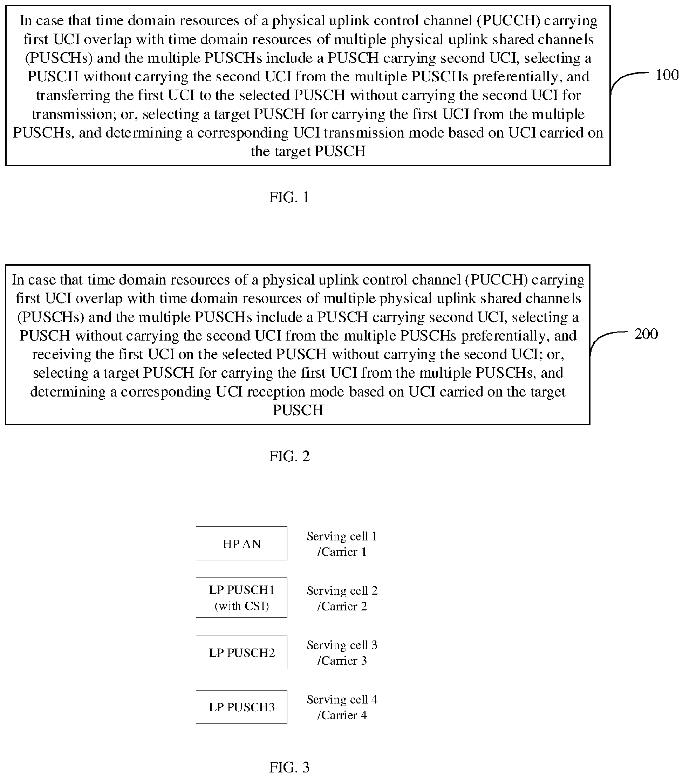

FIG. 1 is a first schematic flowchart of a method for uplink control information (UCI) transmission according to an embodiment of the present application. The method is performed by a terminal, such as a user equipment (UE). As shown in FIG. 1, the method includes the following steps.

Step 100: in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and transferring the first UCI to the selected PUSCH without carrying the second UCI for transmission; or, selecting a target PUSCH for carrying the first UCI from the multiple PUSCHs, and determining a corresponding UCI transmission mode based on UCI carried on the target PUSCH,
where the PUCCH and the PUSCH carrying the second UCI have different priorities, or the first UCI includes first priority UCI and the second UCI includes second priority UCI.

It should be noted that the determination of the corresponding UCI transmission mode based on the UCI carried on the target PUSCH described in the embodiments is not limited to determine the corresponding UCI transmission mode based on the UCI carried on the target PUSCH, and may also include to determine the corresponding UCI transmission mode based on other information or a combination of the UCI carried on the target PUSCH and other information.

In an embodiment, the method includes:
in case that time domain resources of a PUCCH carrying first UCI overlap with time domain resources of multiple PUSCHs and the multiple PUSCHs include a PUSCH carrying second UCI, selecting a PUSCH without carrying the second UCI from the multiple PUSCHs preferentially, and transmitting the first UCI on the selected PUSCH without carrying the second UCI; or, selecting a target PUSCH for carrying the first UCI from the multiple PUSCHs, and determining a corresponding UCI transmission mode based on UCI carried on the target PUSCH,
where the PUCCH and the PUSCH carrying the second UCI have different priorities, or the first UCI includes first priority UCI and the second UCI includes second priority UCI.

In an embodiment, the first UCI refers to UCI carried on the PUCCH. The first UCI may be one or more pieces of UCI. When there are multiple pieces of the first UCI, the first UCI may be understood as a set of UCI carried on the PUCCH. Alternatively, the first UCI may refer to specific UCI carried on the PUCCH, such as HARQ-ACK. If other UCI, such as SR, is also carried on the PUCCH, the first UCI may not include the other UCI. The first UCI being HARQ-ACK is taken as an example, the PUCCH that carries only HARQ-ACK and the PUCCH that carries both HARQ-ACK and SR are both called the PUCCH carrying the first UCI.

In an embodiment, the multiple PUSCHs overlapping with the PUCCH in time domain resources include the PUSCH carrying the second UCI. The second UCI may be one or more pieces of UCI. When there are multiple pieces of the second UCI, the second UCI may be understood as a set of UCI carried on the PUSCH carrying the second UCI. Alternatively, the second UCI may refer to specific UCI carried on the PUSCH, such as CSI. If other UCI, such as HARQ-ACK, is also carried on the PUSCH, the second UCI may do not include the other UCI. The second UCI being CSI is taken as an example, the PUSCH that carries only CSI and the PUSCH that carries both HARQ-ACK and CSI are both called the PUSCH carrying the second UCI.

The first UCI includes the first priority UCI and the second UCI includes the second priority UCI, which may be understood as a kind of UCI included in the first UCI and a kind of UCI included in the second UCI have different priorities. The first priority and the second priority represent different priorities. For example, the first priority is high priority and the second priority is low priority; or, the first priority is low priority and the second priority is high priority. The specific types of the first priority and the second priority are not limited here, as long as the first priority and the second priority are different.

For example, the first UCI is a high priority HARQ-ACK, and the second UCI is one or a combination of low priority HARQ-ACK or low priority CSI; or, the first UCI is one or a combination of low priority HARQ-ACK or low priority CSI, and the second UCI is one or a combination of high priority HARQ-ACK or high priority CSI; or when the first UCI is high priority HARQ-ACK + low priority HARQ-ACK, the second UCI is either one or a combination of high priority CSI or low priority CSI.

In an embodiment, the first UCI may include at least high priority UCI, and the second UCI may include at least low priority UCI; or it may be that the first UCI includes at least low priority UCI, and the second UCI may include at least high priority UCI.

A case where the first UCI at least includes high priority UCI and the second UCI at least includes low priority UCI is as follows:
for example, the first UCI is high priority HARQ-ACK and the second UCI is low priority CSI (such as periodic CSI, SP-CSI, etc. originally configured to be transmitted on the PUCCH are considered low priority CSI; if the CSI itself is transmitted on the PUSCH, such as the A-CSI or SP-CSI transmitted on the PUSCH, its priority may be indicated based on the priority indication field in the PDCCH for triggering the A-CSI or SP-CSI, and may be high priority or low priority);
for example, the first UCI is high priority HARQ-ACK, and the second UCI includes low priority HARQ-ACK and low priority CSI; or
for example, the first UCI includes high priority HARQ-ACK and low priority HARQ-ACK, and the second UCI is low priority CSI.

A case where the first UCI at least includes low priority UCI, and the second UCI at least includes high priority UCI is as follows:
for example, the first UCI is low priority HARQ-ACK, and the second UCI is high priority CSI;
for example, the first UCI is low priority HARQ-ACK, and the second UCI includes high priority HARQ-ACK and high priority CSI;
for example, the first UCI includes low priority HARQ-ACK and high priority HARQ-ACK, and the second UCI is high priority CSI;
for example, the first UCI includes low priority HARQ-ACK and low priority CSI, and the second UCI is high priority CSI;
for example, the first UCI includes low priority HARQ-ACK and low priority CSI, and the second UCI includes high priority HARQ-ACK and high priority CSI; or
for example, the first UCI is low priority CSI, and the second UCI includes at least one of high priority HARQ-ACK or high priority CSI.

In an embodiment, the first UCI and the second UCI satisfy any or any combination of the following conditions:
the UCI included in the first UCI and the UCI included in the second UCI include UCI that does not support multiplexing transmission, which may be understood as a kind of UCI included in the first UCI and a kind of UCI included in the second UCI do not support multiplexing transmission, for example, assuming that multiplexing transmission of HARQ-ACK and CSI with different priorities is not supported, the first UCI includes high priority HARQ-ACK and the second UCI includes low priority CSI, then this condition is satisfied; or,
the first UCI includes HARQ-ACK and/or CSI, and the second UCI includes HARQ-ACK and/or CSI.

In case that time domain resources of PUCCH carrying the first UCI overlap with time domain resources of the multiple PUSCHs, and the multiple PUSCHs include the PUSCH carrying second UCI, embodiments of the present application provide a solution for UCI transmission, including mode 1 and mode 2.

Mode 1: a PUSCH without carrying the second UCI is selected preferentially from the multiple PUSCHs, and after one PUSCH without carrying the second UCI is selected, the first UCI carried on the PUCCH is transferred to the selected PUSCH without carrying the second UCI for transmission, that is, the first UCI is transmitted on the PUSCH without carrying the second UCI, rather than on the PUSCH carrying the second UCI, and the original PUCCH carrying the first UCI is not transmitted, to avoid the parallel transmission of PUCCH and PUSCH. "Transfer" refers to an action of placing the UCI originally transmitted on PUCCH on PUSCH for transmission instead of transmitting the PUCCH. In an embodiment, if the first UCI includes multiple kinds of UCI, some kinds of UCI may be dropped since the some kinds of UCI is not supported to be transmitted on the PUSCH or the some kinds of UCI included in the first UCI is not supported to be transmitted simultaneously with some kinds of UCI carried on the PUSCH, and only some kinds of UCI that may be transmitted on the PUSCH is transferred to the PUSCH for transmission.

Mode 2: a target PUSCH is selected from the multiple PUSCHs, and the target PUSCH may be used for carrying the first UCI. After the target PUSCH is selected, the corresponding UCI transmission mode is determined based on UCI carried on the target PUSCH. That is, after the target PUSCH is selected, the corresponding UCI transmission mode may be determined based on the UCI carried on the target PUSCH itself.

In an embodiment, in mode 2, the target PUSCH may be selected according to a rule in the related art, or may according to a combination of the rule in the related art and whether to support multiplexing transmission of different priorities or a rule for selecting PUSCH based on priorities, etc. (the specific combination order may be in any predefined form, for example, the rule for selecting PUSCH based on priorities may be added before or after any of the above selection steps), which is not limited here. That is, when selecting the target PUSCH in mode 2, whether the UCI carried on the PUSCH supports simultaneous transmission with the first UCI is not taken into account. The rule in the related art may be to select based on a combination rule of whether A-CSI is carried, the carrier number of the carrier where the PUSCH is located, whether the PUSCH has a corresponding PDCCH, and the starting position of the PUSCH. For example, the PUSCH carrying A-CSI is selected preferentially; when there is no PUSCH carrying A-CSI, if there are both PUSCH with PDCCH scheduling (DG PUSCH) and PUSCH without PDCCH scheduling (CG PUSCH, SP-CSI PUSCH, etc.), DG PUSCH is selected preferentially. After the selection according to the above rules, if there are PUSCHs on multiple carriers, the PUSCH on a carrier with a lower carrier number is selected preferentially; and if there are multiple PUSCHs that do not overlap in time domain on the selected carrier overlap with PUCCH, the earliest PUSCH is selected.

In the method for UCI transmission provided by the embodiments of the present application, in case that time domain resources of the PUCCH carrying first UCI overlap with time domain resources of multiple PUSCHs and the multiple PUSCHs include the PUSCH carrying second UCI, the terminal selects the PUSCH without carrying the second UCI from the multiple PUSCHs preferentially and transmits the first UCI on the selected PUSCH without carrying the second UCI, avoiding a possible problem of transmission failure caused by transmitting UCI with different priorities on the same PUSCH; or, the terminal determines a corresponding UCI transmission mode based on UCI carried on the target PUSCH selected from the multiple PUSCHs, to provide specific method for UCI transmission for the problem that there is no clear transmission scheme in relevant scenarios, ensuring the normal operation of the system.

In an embodiment, in mode 1, selecting the PUSCH without carrying the second UCI preferentially further includes any of the following:
a combination of selecting the PUSCH without carrying the second UCI preferentially and selecting a PUSCH with the same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with the same priority as the PUCCH preferentially, and selecting a PUSCH supporting multiplexing transmission of different priorities preferentially.

In an embodiment, in mode 1, the PUSCH without carrying the second UCI may be selected preferentially from the all PUSCHs overlapping with the PUCCH in time domain resources first according to the following rule 1, or a combination of rule 1 and one or more of rule 2 or rule 3, and then according to the rule in the related art, such as whether A-CSI is carried, the carrier number of the carrier where the PUSCH is located, whether the PUSCH has a corresponding PDCCH, and the starting position of the PUSCH, etc.
Rule 1: selecting the PUSCH without carrying the second UCI.
Rule 2: selecting a PUSCH with the same priority as the PUCCH.
Rule 3: selecting a PUSCH supporting multiplexing of different priorities, where the priority may refer to the priority of the channel or the priority of the UCI, etc., which is not limited here.

In an embodiment, when the selection is performed, the rule 1, rule 2, and rule 3 may be adopted in combinations with different orders, such as, rule 1 + related art; rule 1 + rule 2 + related art; rule 1 + rule 3 + related art; rule 1 + rule 2 + rule 3 + related art; rule 2 + rule 1 + related art; rule 3 + rule 1 + related art; rule 1 + rule 3 + rule 2 + related art; rule 2 + rule 1 + rule 3 + related art; rule 3 + rule 1 + rule 2 + related art; rule 2 + rule 3 + rule 1 + related art; rule 3 + rule 2 + rule 1 + related art, etc. The writing order of the above combinations represents the order in which the rules are used.

For example, among all PUSCHs overlapping with the PUCCH in time domain resources, first selecting the PUSCH without carrying the second UCI, and then performing the selection according to a mode in the related art;
for example, among all PUSCHs overlapping with the PUCCH in time domain resources, first selecting the PUSCH without carrying the second UCI, then selecting the PUSCH with the same priority as the PUCCH, and then performing the selection according to a mode in the related art;
for example, among all PUSCHs overlapping with the PUCCH in time domain resources, first selecting the PUSCH with the same priority as the PUCCH, then selecting the PUSCH without carrying the second UCI, and then performing the selection according to a mode in the related art;
for example, among all PUSCHs overlapping with the PUCCH in time domain resources, first selecting the PUSCH without carrying the second UCI, then selecting the PUSCH supporting multiplexing of different priorities, and then performing the selection according to a mode in the related art;
for example, among all PUSCHs overlapping with the PUCCH in time domain resources, first selecting the PUSCH supporting multiplexing of different priorities, then selecting the PUSCH without carrying the second UCI, and then performing the selection according to a mode in the related art;
for example, among all PUSCHs overlapping with the PUCCH in time domain resources, first selecting the PUSCH without carrying the second UCI, then selecting the PUSCH with the same priority as the PUCCH, then selecting the PUSCH supporting multiplexing of different priorities, and then performing the selection according to a mode in the related art;
for example, among all PUSCHs overlapping with the PUCCH in time domain resources, first selecting the PUSCH without carrying the second UCI, then selecting the PUSCH supporting multiplexing of different priorities, then selecting the PUSCH with the same priority as the PUCCH, and then performing the selection according to a mode in the related art;
for example, among all PUSCHs overlapping with the PUCCH in time domain resources, first selecting the PUSCH supporting multiplexing of different priorities, then selecting the PUSCH with the same priority as the PUCCH, then selecting the PUSCH without carrying the second UCI, and then performing the selection according to a mode in the related art;
for example, among all PUSCHs overlapping with the PUCCH in time domain resources, first selecting the PUSCH supporting multiplexing of different priorities, then selecting the PUSCH without carrying the second UCI, then selecting the PUSCH with the same priority as the PUCCH, and then performing the selection according to a mode in the related art;
for example, among all PUSCHs overlapping with the PUCCH in time domain resources, first selecting the PUSCH with the same priority as the PUCCH, then selecting the PUSCH supporting multiplexing of different priorities, then selecting the PUSCH without carrying the second UCI, and then performing the selection according to a mode in the related art; or,
for example, among all PUSCHs overlapping with the PUCCH in time domain resources, first selecting the PUSCH with the same priority as the PUCCH, then selecting the PUSCH without carrying the second UCI, then selecting the PUSCH supporting multiplexing of different priorities, and then performing the selection according to a mode in the related art.

After selecting a PUSCH without carrying the second UCI through the above rules, the first UCI carried on the PUCCH may be transferred to the selected PUSCH without carrying the second UCI for transmission, to avoid a possible problem of transmission failure caused by transmitting UCI with different priorities on the same PUSCH, ensuring the normal operation of the system. In an embodiment, the network device (such as a base station) and the terminal may make an agreement that not all PUSCHs overlapping with the PUCCH in time domain resources carry the second UCI, that is, a PUSCH without carrying the second UCI may always be selected. Alternatively, if it is allowed that all PUSCHs overlapping with the PUCCH in time domain resources carry the second UCI, the mode 2 or any of transmission modes 1 to 3 for the case of the target PUSCH being a PUSCH carrying the second UCI in mode 2 may be reused to resolve the resource conflict between the PUCCH and PUSCH.

In an embodiment, in mode 2, determining the corresponding UCI transmission mode based on UCI carried on the target PUSCH includes:
transferring the first UCI to the target PUSCH for transmission in case that the target PUSCH does not carry the second UCI; or,
performing transmission according to any of the following in case that the target PUSCH carries the second UCI:
   dropping the second UCI and transferring the first UCI to the target PUSCH for transmission; or,
   dropping a part of UCI in the second UCI, transferring the first UCI to the target PUSCH, and transmitting the first UCI together with remaining UCI in the second UCI; or,
   dropping a part of UCI in the first UCI, transferring remaining UCI in the first UCI to the target PUSCH, and transmitting the second UCI together with the remaining UCI in the first UCI; or,
   transferring the first UCI to the target PUSCH and transmitting the second UCI together with the first UCI; or,
   dropping the target PUSCH or dropping the PUCCH.

In an embodiment, determining the corresponding UCI transmission mode based on UCI carried on the target PUSCH includes:
transmitting the first UCI on the target PUSCH in case that the target PUSCH does not carry the second UCI; or,
performing transmission according to any of the following in case that the target PUSCH carries the second UCI:
   dropping the second UCI and transmitting the first UCI on the target PUSCH; or,
   dropping a part of UCI in the second UCI, and transmitting the first UCI together with remaining UCI in the second UCI on the target PUSCH; or,
   dropping a part of UCI in the first UCI, and transmitting the second UCI together with the remaining UCI in the first UCI on the target PUSCH; or,
   transmitting the second UCI together with the first UCI on the target PUSCH; or,
   dropping the target PUSCH or dropping the PUCCH.

In mode 2, after the target PUSCH is selected from the multiple PUSCHs, the corresponding UCI transmission mode may be determined based on the UCI carried on the target PUSCH.

In an embodiment, in case that the target PUSCH does not carry the second UCI, the first UCI may be transferred to the target PUSCH for transmission, to avoid a possible problem of transmission failure caused by transmitting UCI with different priorities on the same PUSCH, ensuring the normal operation of the system.

In an embodiment, in case that the target PUSCH carries the second UCI, any of the following manners may be used for transmission.

Manner 1: dropping the second UCI and transferring the first UCI to the target PUSCH for transmission; or, dropping a part of UCI in the second UCI (such as dropping the UCI that cannot be multiplexed with the first UCI for transmission), transferring the first UCI to the target PUSCH, and transmitting the first UCI together with remaining UCI in the second UCI; or, dropping a part of UCI in the first UCI (such as dropping the UCI that cannot be multiplexed with the second UCI for transmission), transferring remaining content of the first UCI to the target PUSCH, and transmitting the second UCI together with the remaining content of the first UCI.

Manner 2: directly transferring the first UCI to the target PUSCH and transmitting the second UCI together with the first UCI.

Manner 3: dropping the target PUSCH, that is, the PUSCH is not transmitted, and the information (including data and UCI) is also dropped accordingly; or dropping the PUCCH, that is, the PUCCH carrying the first UCI is not transmitted, and the first UCI is also dropped along with the PUCCH.

"Dropping" refers to that the terminal does not transmit the uplink channel or UCI any more, and accordingly, the network device no longer receives this uplink channel or UCI.

In an embodiment, after dropping the target PUSCH, the method further includes:
dropping all other PUSCHs overlapping with the PUCCH in time domain resources, and transmitting the PUCCH carrying the first UCI; or,
selecting another target PUSCH for carrying the first UCI from remaining PUSCHs overlapping with the PUCCH in time domain resources, and determining the corresponding UCI transmission mode based on the UCI carried on the another target PUSCH.

In an embodiment, after dropping the target PUSCH, if there are other PUSCHs overlapping with the PUCCH in time domain resources, any of the following processing manners may be adopted.
(1) All other PUSCHs overlapping with the PUCCH in time domain resources are directly dropped, that is, the all other PUSCHs are not transmitted, and the information (including data and UCI) on the PUSCHs is also dropped accordingly, and transmitting the PUCCH carrying the first UCI.
(2) Another (new) target PUSCH for carrying the first UCI on the PUCCH from remaining PUSCHs overlapping with the PUCCH in time domain resources (that is, except for the target PUSCH, all other PUSCHs overlapping with the PUCCH in time domain resources) is determined, and whether the new target PUSCH for carrying the first UCI on the PUCCH carries the second UCI is determined. If it does not carry the second UCI, transferring the first UCI on the PUCCH to the new target PUSCH for transmission; or, if it carries the second UCI, dropping the new target PUSCH, and continuing to select the next new target PUSCH, which is repeated until a target PUSCH without carrying the second UCI is found, and then transferring the first UCI on the PUCCH to the target PUSCH for transmission.

In an embodiment, in case that the UCI carried on the PUCCH has different priorities, the priority of the PUCCH is high priority or a third priority; or,
in case that the UCI carried on the PUSCH has different priorities, the priority of the PUSCH is high priority or a third priority,
where the third priority is a priority type other than high priority and low priority.

In an embodiment, in case that the PUCCH or PUSCH is a PUCCH or PUSCH that simultaneously carries UCI of different priorities, the priority of the PUCCH or PUSCH may be the priority of high priority UCI among the UCI of different priorities, that is, high priority; alternatively, the priority of PUCCH or PUSCH may be another priority type other than the high priority and the low priority, that is, the third priority. For example, the third priority may be a mixed priority or may be a priority having a higher priority than the high priority.

For example, assuming that the PUCCH carries both high priority HARQ-ACK and low priority HARQ-ACK simultaneously, the priority of the PUCCH may be high priority; or it may be the third priority, such as a mixed priority or a priority having a higher priority than the high priority. The same applies to PUSCH, which is not repeated here.

In an embodiment, the multiple PUSCHs are PUSCHs that cannot be transmitted simultaneously with the PUCCH.

In the embodiments of the present application, all PUSCHs overlapping with the PUCCH in time domain resources are PUSCHs that cannot be transmitted simultaneously with the PUCCH. The specific situations may include any of the following.
(1) It may be that the terminal does not have the capability to transmit PUCCH and PUSCH simultaneously; or the terminal has the capability to transmit PUCCH and PUSCH simultaneously, but this function is not configured to be enabled, and then no PUSCH may be transmitted simultaneously with PUCCH.
(2) The terminal may have the capability to transmit PUCCH and PUSCH simultaneously, and this function is configured to be enabled, but the combination of PUCCH and PUSCH does not satisfy the condition for parallel transmission. For example, the PUCCH and PUSCH have the same priority and then cannot be transmitted simultaneously; or the PUCCH and PUSCH cannot be transmitted simultaneously if the PUCCH and PUSCH have different priorities and are on the same component carrier (CC) or intra-band CC. The PUCCH and PUSCH may be transmitted simultaneously when they have different priorities and are on inter-band CC respectively.

FIG. 2 is a second schematic flowchart of a method for uplink control information (UCI) transmission according to an embodiment of the present application. The method may be performed by a network device (such as a base station). As shown in FIG. 2, the method includes the following steps.

Step 200: in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and receiving the first UCI on the selected PUSCH without carrying the second UCI; or, selecting a target PUSCH for carrying the first UCI from the multiple PUSCHs, and determining a corresponding UCI reception mode based on UCI carried on the target PUSCH,
where the PUCCH and the PUSCH carrying the second UCI have different priorities, or the first UCI includes first priority UCI and the second UCI includes second priority UCI.

In an embodiment, the first UCI refers to UCI carried on the PUCCH. The first UCI may be one or more pieces of UCI. When there are multiple pieces of the first UCI, the first UCI may be understood as a set of UCI carried on the PUCCH. Alternatively, the first UCI may refer to specific UCI carried on the PUCCH, such as HARQ-ACK. If other UCI, such as SR, is also carried on the PUCCH, the first UCI may do not include the other UCI. The first UCI being HARQ-ACK is taken as an example, the PUCCH that carries only HARQ-ACK and the PUCCH that carries both HARQ-ACK and SR are both called the PUCCH carrying the first UCI.

In an embodiment, the multiple PUSCHs overlapping with the PUCCH in time domain resources include the PUSCH carrying the second UCI. The second UCI may be one or more pieces of UCI. When there are multiple pieces of the second UCI, the second UCI may be understood as a set of UCI carried on the PUSCH carrying the second UCI. Alternatively, the second UCI may refer to specific UCI carried on the PUSCH, such as CSI. If other UCI, such as HARQ-ACK, is also carried on the PUSCH, the second UCI may do not include the other UCI. The second UCI being CSI is taken as an example, the PUSCH that carries only CSI and the PUSCH that carries both HARQ-ACK and CSI are both called the PUSCH carrying the second UCI.

The first UCI includes the first priority UCI and the second UCI includes the second priority UCI, which may be understood as a kind of UCI included in the first UCI and a kind of UCI included in the second UCI have different priorities. The first priority and the second priority represent different priorities. For example, the first priority is high priority and the second priority is low priority; or, the first priority is low priority and the second priority is high priority. The specific types of the first priority and the second priority are not limited here, as long as the first priority and the second priority are different.

For example, the first UCI is a high priority HARQ-ACK, and the second UCI is one or a combination of low priority HARQ-ACK or low priority CSI; or, the first UCI is one or a combination of low priority HARQ-ACK or low priority CSI, and the second UCI is one or a combination of high priority HARQ-ACK or high priority CSI; or when the first UCI is high priority HARQ-ACK + low priority HARQ-ACK, the second UCI is either one or a combination of high priority CSI or low priority CSI.

In an embodiment, the first UCI may include at least high priority UCI, and the second UCI may include at least low priority UCI; or it may be that the first UCI includes at least low priority UCI, and the second UCI may include at least high priority UCI.

A case where the first UCI at least includes high priority UCI and the second UCI at least includes low priority UCI is as follows:
for example, the first UCI is high priority HARQ-ACK and the second UCI is low priority CSI (such as periodic CSI, SP-CSI, etc. originally configured to be transmitted on the PUCCH are considered low priority CSI; if the CSI itself is transmitted on the PUSCH, such as the A-CSI or SP-CSI transmitted on the PUSCH, its priority may be indicated based on the priority indication field in the PDCCH for triggering the A-CSI or SP-CSI, and may be high priority or low priority);
for example, the first UCI is high priority HARQ-ACK, and the second UCI includes low priority HARQ-ACK and low priority CSI; or
for example, the first UCI includes high priority HARQ-ACK and low priority HARQ-ACK, and the second UCI is low priority CSI.

A case where the first UCI at least includes low priority UCI, and the second UCI at least includes high priority UCI is as follows:
for example, the first UCI is low priority HARQ-ACK, and the second UCI is high priority CSI;
for example, the first UCI is low priority HARQ-ACK, and the second UCI includes high priority HARQ-ACK and high priority CSI;
for example, the first UCI includes low priority HARQ-ACK and high priority HARQ-ACK, and the second UCI is high priority CSI;
for example, the first UCI includes low priority HARQ-ACK and low priority CSI, and the second UCI is high priority CSI;
for example, the first UCI includes low priority HARQ-ACK and low priority CSI, and the second UCI includes high priority HARQ-ACK and high priority CSI; or
for example, the first UCI is low priority CSI, and the second UCI includes at least one of high priority HARQ-ACK or high priority CSI.

In an embodiment, the first UCI and the second UCI satisfy any or any combination of the following conditions:
the UCI included in the first UCI and the UCI included in the second UCI include UCI that does not support multiplexing transmission, which may be understood as a kind of UCI included in the first UCI and a kind of UCI included in the second UCI do not support multiplexing transmission, for example, assuming that multiplexing transmission of HARQ-ACK and CSI with different priorities is not supported, the first UCI includes high priority HARQ-ACK and the second UCI includes low priority CSI, then this condition is satisfied; or,
the first UCI includes HARQ-ACK and/or CSI, and the second UCI includes HARQ-ACK and/or CSI.

In case that time domain resources of PUCCH carrying the first UCI overlap with time domain resources of the multiple PUSCHs and the multiple PUSCHs include the PUSCH carrying second UCI, embodiments of the present application provide a solution for UCI transmission, where for the network device (such as a base station) side, the solution may include the following mode 1 and mode 2.

Mode 1: a PUSCH without carrying the second UCI is selected preferentially from the multiple PUSCHs, and after one PUSCH without carrying the second UCI is selected, the first UCI is received on the selected PUSCH without carrying the second UCI. That is, when receiving UCI, the selected PUSCH without carrying the second UCI may be received and the first UCI may be obtained from it, and there is no need to receive the original PUCCH carrying the first UCI.

Mode 2: a target PUSCH is selected from the multiple PUSCHs, and the target PUSCH may be a PUSCH used for carrying the first UCI. After the target PUSCH is selected, the corresponding UCI reception mode is determined based on UCI carried on the target PUSCH. That is, after the target PUSCH is selected, the corresponding UCI reception mode may be determined based on the UCI carried on the target PUSCH itself.

In an embodiment, in mode 2, the target PUSCH may be selected according to a rule in the related art, or may according to a combination of the rule in the related art and whether to support multiplexing transmission of different priorities or a rule for selecting PUSCH based on priorities, etc. (the specific combination order may be in any predefined form, for example, the rule for selecting PUSCH based on priorities may be added before or after any of the above selection steps), which is not limited here. That is, when selecting the target PUSCH in mode 2, whether the UCI carried on the PUSCH supports simultaneous transmission with the first UCI is not taken into account. The rule in the related art may be to select based on a combination rule of whether A-CSI is carried, the carrier number of the carrier where the PUSCH is located, whether the PUSCH has a corresponding PDCCH, and the starting position of the PUSCH. For example, the PUSCH carrying A-CSI is selected preferentially; when there is no PUSCH carrying A-CSI, if there are both PUSCH with PDCCH scheduling (DG PUSCH) and PUSCH without PDCCH scheduling (CG PUSCH, SP-CSI PUSCH, etc.), DG PUSCH is selected preferentially. After the selection according to the above rules, if there are PUSCHs on multiple carriers, the PUSCH on a carrier with a lower carrier number is selected preferentially; and if there are multiple PUSCHs that do not overlap in time domain on the selected carrier overlap with PUCCH, the earliest PUSCH is selected.

In the method for UCI transmission provided by the embodiments of the present application, in case that time domain resources of the PUCCH carrying first UCI overlap with time domain resources of multiple PUSCHs and the multiple PUSCHs include the PUSCH carrying second UCI, the network device selects the PUSCH without carrying the second UCI from the multiple PUSCHs preferentially and receives the first UCI on the selected PUSCH without carrying the second UCI, avoiding possible problem of transmission failure caused by transmitting UCI with different priorities on the same PUSCH; or, the network device determines a corresponding UCI reception mode based on UCI carried on the target PUSCH selected from the multiple PUSCHs, to provide specific method for UCI transmission for the problem that there is no clear transmission scheme in relevant scenarios, ensuring the normal operation of the system.

In an embodiment, in mode 1, selecting the PUSCH without carrying the second UCI preferentially further includes any of the following:
a combination of selecting the PUSCH without carrying the second UCI preferentially and selecting a PUSCH with the same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with the same priority as the PUCCH preferentially, and selecting a PUSCH supporting multiplexing transmission of different priorities preferentially.

In an embodiment, in mode 1, the PUSCH without carrying the second UCI may be selected preferentially from the all PUSCHs overlapping with the PUCCH in time domain resources first according to the following rule 1, or a combination of rule 1 and one or more of rule 2 or rule 3, and then according to the rule in the related art, such as whether A-CSI is carried, the carrier number of the carrier where the PUSCH is located, whether the PUSCH has a corresponding PDCCH, and the starting position of the PUSCH, etc.
Rule 1: selecting the PUSCH without carrying the second UCI.
Rule 2: selecting a PUSCH with the same priority as the PUCCH.
Rule 3: selecting a PUSCH supporting multiplexing of different priorities, where the priority may refer to the priority of the channel or the priority of the UCI, etc., which is not limited here.

In an embodiment, when the selection is performed, the rule 1, rule 2, and rule 3 may be adopted in combinations with different orders, such as, rule 1 + related art; rule 1 + rule 2 + related art; rule 1 + rule 3 + related art; rule 1 + rule 2 + rule 3 + related art; rule 2 + rule 1 + related art; rule 3 + rule 1 + related art; rule 1 + rule 3 + rule 2 + related art; rule 2 + rule 1 + rule 3 + related art; rule 3 + rule 1 + rule 2 + related art; rule 2 + rule 3 + rule 1 + related art; rule 3 + rule 2 + rule 1 + related art, etc. The writing order of the above combinations represents the order in which the rules are used.

For example, among all PUSCHs overlapping with the PUCCH in time domain resources, first selecting the PUSCH without carrying the second UCI, and then performing the selection according to a mode in the related art;
for example, among all PUSCHs overlapping with the PUCCH in time domain resources, first selecting the PUSCH without carrying the second UCI, then selecting the PUSCH with the same priority as the PUCCH, and then performing the selection according to a mode in the related art;
for example, among all PUSCHs overlapping with the PUCCH in time domain resources, first selecting the PUSCH with the same priority as the PUCCH, then selecting the PUSCH without carrying the second UCI, and then performing the selection according to a mode in the related art;
for example, among all PUSCHs overlapping with the PUCCH in time domain resources, first selecting the PUSCH without carrying the second UCI, then selecting the PUSCH supporting multiplexing of different priorities, and then performing the selection according to a mode in the related art;
for example, among all PUSCHs overlapping with the PUCCH in time domain resources, first selecting the PUSCH supporting multiplexing of different priorities, then selecting the PUSCH without carrying the second UCI, and then performing the selection according to a mode in the related art;
for example, among all PUSCHs overlapping with the PUCCH in time domain resources, first selecting the PUSCH without carrying the second UCI, then selecting the PUSCH with the same priority as the PUCCH, then selecting the PUSCH supporting multiplexing of different priorities, and then performing the selection according to a mode in the related art;
for example, among all PUSCHs overlapping with the PUCCH in time domain resources, first selecting the PUSCH without carrying the second UCI, then selecting the PUSCH supporting multiplexing of different priorities, then selecting the PUSCH with the same priority as the PUCCH, and then performing the selection according to a mode in the related art;
for example, among all PUSCHs overlapping with the PUCCH in time domain resources, first selecting the PUSCH supporting multiplexing of different priorities, then selecting the PUSCH with the same priority as the PUCCH, then selecting the PUSCH without carrying the second UCI, and then performing the selection according to a mode in the related art;
for example, among all PUSCHs overlapping with the PUCCH in time domain resources, first selecting the PUSCH supporting multiplexing of different priorities, then selecting the PUSCH without carrying the second UCI, then selecting the PUSCH with the same priority as the PUCCH, and then performing the selection according to a mode in the related art;
for example, among all PUSCHs overlapping with the PUCCH in time domain resources, first selecting the PUSCH with the same priority as the PUCCH, then selecting the PUSCH supporting multiplexing of different priorities, then selecting the PUSCH without carrying the second UCI, and then performing the selection according to a mode in the related art; or,
for example, among all PUSCHs overlapping with the PUCCH in time domain resources, first selecting the PUSCH with the same priority as the PUCCH, then selecting the PUSCH without carrying the second UCI, then selecting the PUSCH supporting multiplexing of different priorities, and then performing the selection according to a mode in the related art.

After selecting a PUSCH without carrying the second UCI through the above rules, the first UCI may be received on the selected PUSCH without carrying the second UCI, to avoid a possible problem of transmission failure caused by transmitting UCI with different priorities on the same PUSCH, ensuring the normal operation of the system.

In an embodiment, in mode 2, determining the corresponding UCI reception mode based on UCI carried on the target PUSCH includes:
receiving the first UCI on the target PUSCH in case that the target PUSCH does not carry the second UCI; or,
performing reception according to any of the following in case that the target PUSCH carries the second UCI:
   determining that the second UCI is dropped and receiving the first UCI on the target PUSCH; or,
   determining that a part of UCI in the second UCI is dropped and receiving the first UCI together with remaining UCI in the second UCI on the target PUSCH; or,
   determining that a part of UCI in the first UCI is dropped and receiving the second UCI together with remaining UCI in the first UCI on the target PUSCH; or
   receiving the first UCI and the second UCI on the target PUSCH; or,
   determining that the target PUSCH is dropped; or,
   determining that the PUCCH is dropped.

In mode 2, after the target PUSCH is selected from the multiple PUSCHs, the corresponding UCI reception mode may be determined based on the UCI carried on the target PUSCH.

In an embodiment, in case that the target PUSCH does not carry the second UCI, the first UCI may be received on the target PUSCH.

In an embodiment, in case that the target PUSCH carries the second UCI, any one of the following manners may be used for reception.

Manner 1: if it is determined that the second UCI is dropped (for example, it is determined that the terminal side has dropped the second UCI based on a predetermined rule with the terminal), the first UCI is received on the target PUSCH; or, if it is determined that a part of UCI in the second UCI (such as UCI that cannot be multiplexed with the first UCI for transmission) is dropped, the first UCI together with remaining UCI in the second UCI is received on the target PUSCH; or, if it is determined that a part of UCI in the first UCI (such as UCI that cannot be multiplexed with the second UCI for transmission) is dropped, the second UCI together with remaining UCI in the first UCI is received on the target PUSCH.

Manner 2: the first UCI and the second UCI is directly received on the target PUSCH.

Manner 3: if it is determined that the target PUSCH is dropped, the target PUSCH will not be received, including not receiving data and UCI on the target PUSCH; or, if it is determined that PUCCH is dropped, the PUCCH carrying the first UCI will not be received, and the first UCI will also be dropped along with the PUCCH, only PUSCH is received.

In an embodiment, after determining that the target PUSCH is dropped, the method further includes:
determining that all other PUSCHs overlapping with the PUCCH in time domain resources are dropped and receiving the PUCCH carrying the first UCI; or,
selecting another target PUSCH for carrying the first UCI from remaining PUSCHs overlapping with the PUCCH in time domain resources, and determining the corresponding UCI reception mode based on the UCI carried on the another target PUSCH.

In an embodiment, if it is determined that the target PUSCH is dropped and there are other PUSCHs overlapping with the PUCCH in time domain resources, any of the following processing manners may be adopted.
(1) If it is further determined that all other PUSCHs overlapping with the PUCCH in time domain resources are dropped, these PUSCHs are not received, including not receiving data and UCI on these PUSCHs, and receiving only the PUCCH carrying the first UCI.
(2) Another (new) target PUSCH for carrying the first UCI on the PUCCH from remaining PUSCHs overlapping with the PUCCH in time domain resources (that is, except for the target PUSCH, all other PUSCHs overlapping with the PUCCH in time domain resources) is determined, and whether the new target PUSCH for carrying the first UCI on the PUCCH carries the second UCI is determined, if it does not carry the second UCI, receiving the first UCI on the new target PUSCH; or, if it carries the second UCI, determining that the new target PUSCH is dropped, and continuing to select the next new target PUSCH, which is repeated until a target PUSCH without carrying the second UCI is found, and then receiving the first UCI on the target PUSCH.

In an embodiment, in case that the UCI carried on the PUCCH has different priorities, the priority of the PUCCH is high priority or a third priority; or,
in case that the UCI carried on the PUSCH has different priorities, the priority of the PUSCH is high priority or a third priority,
where the third priority is a priority type other than high priority and low priority.

In an embodiment, in case that the PUCCH or PUSCH is a PUCCH or PUSCH that simultaneously carries UCI of different priorities, the priority of the PUCCH or PUSCH may be the priority of high priority UCI among the UCI of different priorities, that is, high priority; alternatively, the priority of PUCCH or PUSCH may be another priority type other than the high priority and low priority, that is, the third priority. For example, the third priority may be a mixed priority or may be a priority having a higher priority than the high priority.

For example, assuming that the PUCCH carries both high priority HARQ-ACK and low priority HARQ-ACK simultaneously, the priority of the PUCCH may be high priority; or it may be the third priority, such as a mixed priority or a priority having a higher priority than the high priority. The same applies to PUSCH, which is not repeated here.

In an embodiment, the multiple PUSCHs are PUSCHs that cannot be transmitted simultaneously with the PUCCH.

In the embodiments of the present application, all PUSCHs overlapping with the PUCCH in time domain resources are PUSCHs that cannot be transmitted simultaneously with the PUCCH. The specific situations may include any of the following.

(1) It may be that the terminal does not have the capability to transmit PUCCH and PUSCH simultaneously; or the terminal has the capability to transmit PUCCH and PUSCH simultaneously, but this function is not configured to be enabled, and then no PUSCH may be transmitted simultaneously with PUCCH.

(2) The terminal may have the capability to transmit PUCCH and PUSCH simultaneously, and this function is configured to be enabled, but the combination of PUCCH and PUSCH does not satisfy the condition for parallel transmission. For example, the PUCCH and PUSCH have the same priority and then cannot be transmitted simultaneously; or the PUCCH and PUSCH cannot be transmitted simultaneously if the PUCCH and PUSCH have different priorities and are on the same component carrier (CC) or intra-band CC. The PUCCH and PUSCH may be transmitted simultaneously when they have different priorities and are on inter-band CC respectively.

The methods provided by the embodiments of the present application are based on the same conception, and the implementation of the methods applied to the terminal side and network device side may be referred to each other, and the same part is not repeated.

The following provides specific embodiments as examples for illustrating the methods provided in the above embodiments of the present application.

Embodiment 1: FIG. 3 is a schematic diagram showing an overlapping of resources of a PUCCH and a PUSCH in time domain according to an embodiment of the present application. As shown in FIG. 3, LP represents low priority, HP represents high priority, and AN is the abbreviation for HARQ-ACK, the channel marked with HP AN is high priority (HP) PUCCH carrying high priority HARQ-ACK (HP AN), the first UCI is HP AN, and the second UCI is LP CSI (i.e. the CSI carried on LP PUSCH1). If there is no indication indicating that the PUSCH shown in the figures carries the CSI, this PUSCH (PUSCH2 and LP PUSCH3) is the PUSCH without carrying the CSI.

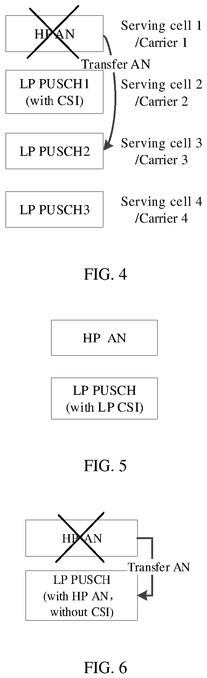

Terminal side: FIG. 4 is a first schematic implementation diagram of a method for UCI transmission according to an embodiment of the present application. The explanation of the annotation in FIG. 4 is the same as that in FIG. 3. As shown in FIG. 4, first selecting PUSCH without carrying CSI from PUSCHs overlapping with PUCCH, i.e., LP PUSCH2 and LP PUSCH3; then, selecting a PUSCH from LP PUSCH2 and LP PUSCH3 according to traditional PUSCH selection rule. For example, assuming that neither LP PUSCH2 nor LP PUSCH3 carries A-CSI and both of them have PDCCH, LP PUSCH2 is selected to carry the HP AN on PUCCH according to a principle of minimum carrier number, that is, the UE side transfers the HP AN on PUCCH to LP PUSCH2, transmits LP PUSCH2 carrying HP AN, and drops PUCCH, where other PUSCHs may be transmitted normally because PUCCH is not transmitted, there is no conflict between PUCCH and PUSCH, and PUSCH on multiple carriers may be transmitted simultaneously. It should be noted that if all PUSCHs carry LP CSI, a PUSCH carrying LP CSI is selected according to PUSCH selection rule to carry HP AN on PUCCH. In this case, the transmission may be performed according to the method in embodiment 2. Alternatively, the base station and terminal may make an agreement in advance that not expecting that all PUSCHs overlapping with PUCCH carry LP CSI, that is, a PUSCH without carrying LP CSI may always be selected to carry HP AN on PUCCH according to the selection rule for PUSCH that do not carry LP CSI.

Base station side: LP PUSCH2 is determined, by using the same method as the terminal side, to be the PUSCH for transmitting HP AN on PUCCH, then the base station receives LP PUSCH2 carrying HP AN, obtains HP AN from LP PUSCH2, and receives other PUSCHs on other carriers without the need to receive PUCCH.

It should be noted that in the above embodiment 1, if HP AN is replaced with HP AN + LP AN, that is, if PUCCH carries both HP AN and LP AN, PUCCH is considered a high priority channel, and the above method is also applicable. If priorities of PUCCH and PUSCH are exchanged in the above embodiment, that is, replacing HP PUCCH with LP PUCCH and replacing LP PUSCH with HP PUSCH, the relevant method is also applicable.

Embodiment 2: FIG. 5 is a schematic diagram of PUCCH and a selected PUSCH according to an embodiment of the present application. The explanation of the annotation in FIG. 5 is the same as that in embodiment 1 (in this embodiment, the explanation of the annotation in FIG. 5 to FIG. 15 may all refer to embodiment 1). As shown in FIG. 5, in case that PUCCH carrying HP AN overlaps with multiple PUSCHs, and an LP PUSCH carrying LP CSI is selected according to PUSCH selection rule (for example, according to the scheme in the related art, or according to a combination of the scheme in the related art and whether to support multiplexing transmission of different priorities or a scheme for selecting PUSCH based on priorities, etc.), multiple transmission modes may be adopted.

### Mode 1

Terminal side: FIG. 6 is a second schematic implementation diagram of a method for UCI transmission according to an embodiment of the present application. As shown in FIG. 6, it is determined to drop LP CSI and transfer HP AN on PUCCH to LP PUSCH for transmission, and PUCCH is not transmitted, where HP AN is transmitted on LP PUSCH according to the transmission scheme defined in related art for AN on PUSCH, such as determining whether to use puncture mode or rate matching mode for transmission based on the number of AN bits, determining the resources for carrying AN on PUSCH based on the corresponding AN resource offset parameter (beta-offset), determining the location of resource of AN based on the resource mapping scheme corresponding to AN and performing mapping. If the higher layer signaling configures resource offset parameters for different priority ANs on LP PUSCH, the resource offset parameters corresponding to HP AN are used to calculate AN resources. If only one resource offset parameter is configured, the priority of AN is not needed to be distinguished, which may be used directly; if there are other PUSCHs, the other PUSCHs may be transmitted normally.

Base station side: the transmission behavior is determined in the same way as the terminal side, and reception is performed according to the corresponding behavior.

### Mode 2

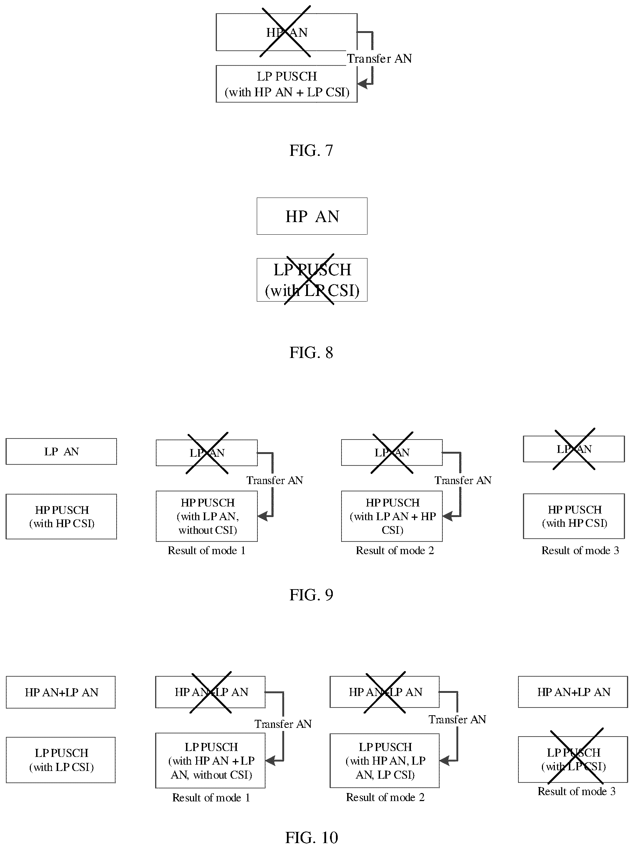

Terminal side: FIG. 7 is a third schematic implementation diagram of a method for UCI transmission according to an embodiment of the present application. As shown in FIG. 7, HP AN is directly transferred to LP PUSCH and transmitted together with LP CSI on PUSCH. HP AN and LP CSI may be transmitted on LP PUSCH according to the transmission mode defined in related art for transmitting AN and CSI on LP PUSCH, such as AN and CSI are independently encoded, resource sizes of AN and CSI on PUSCH are determined based on the resource offset parameters corresponding to AN and CSI, and resource location is found based on the mapping rules of AN and CSI respectively and mapping is performed. If the higher layer signaling configures resource offset parameters for different priority AN/CSI on LP PUSCH, the resource offset parameters corresponding to HP AN are used to calculate AN resources and the resource offset parameters corresponding to LP CSI are used to calculate CSI resources. If only one kind of resource offset parameter is configured for one kind of UCI, the priority is not needed to be distinguished, the resource offset parameters corresponding to the UCI may be used directly to calculate resources; if there are other PUSCHs, the other PUSCHs may be transmitted normally.

Base station side: the transmission behavior is determined in the same way as the terminal side, and reception is performed according to the corresponding behavior.

### Mode 3

Terminal side: FIG. 8 is a fourth schematic implementation diagram of a method for UCI transmission according to an embodiment of the present application. As shown in FIG. 8, it is determined to drop LP PUSCH with LP CSI and only PUCCH carrying HP AN is transmitted. If there are still PUSCHs overlapping with PUCCH on other carriers, these PUSCHs are dropped or another target PUSCH is selected from the remaining PUSCHs and whether the another target PUSCH carries the second UCI is determined. If the another target PUSCH does not carry the second UCI, the UCI on PUCCH is transferred to the target PUSCH for transmission. If the another target PUSCH carries the second UCI, the target PUSCH is dropped and the next target PUSCH is selected, and so on. Alternatively, another mode may also be adopted, which is to drop PUCCH. For cases where PUCCH is LP, it is recommended to drop PUCCH.

Base station side: the transmission behavior is determined in the same way as the terminal side, and reception is performed according to the corresponding behavior.

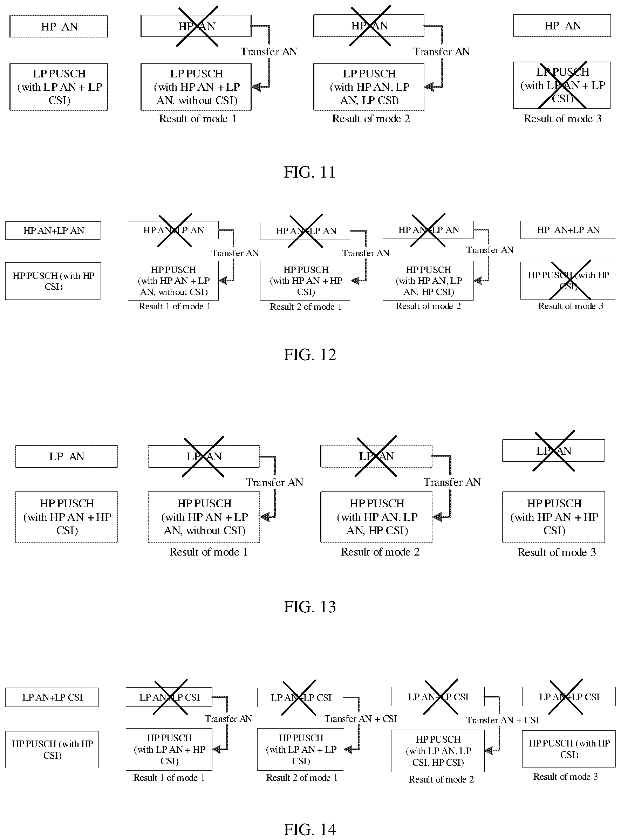

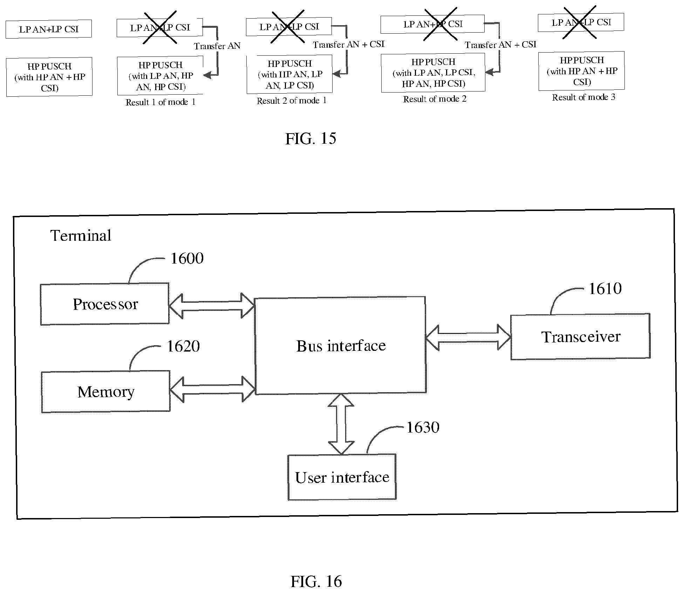

There are a few points that need to be clarified in embodiment 2.
1) If replacing HP AN with LP AN, and replacing LP PUSCH1 with LP CSI with HP PUSCH1 with HP CSI, the method in embodiment 2 is also applicable. FIG. 9 is a fifth schematic implementation diagram of a method for UCI transmission according to an embodiment of the present application, as shown in FIG. 9, when the mode 3 is used, the mode of dropping PUCCH is shown in FIG. 9.
2) If replacing HP AN with HP AN + LP AN, that is, when both HP AN and LP AN are carried on PUCCH, the method in embodiment 2 is also applicable. As shown in FIG. 10, FIG. 10 is a sixth schematic implementation diagram of a method for UCI transmission according to an embodiment of the present application. The difference is that when it is determined to transfer AN to PUSCH for transmission, HP AN and LP AN may be transferred simultaneously, where HP AN and LP AN may be independently or jointly encoded on PUSCH. If it is jointly encoded, HP AN and LP AN are treated as a whole, reusing the transmission mode of AN on PUSCH in the related art. If it is independently encoded, HP AN, LP AN, and LP CSI are encoded independently, and HP AN works according to the transmission mode of AN on PUSCH in the related art, LP AN works according to the transmission mode of CSI part1 in the related art, and LP CSI works according to the transmission mode of CSI part2 in the related art. If LP CSI includes part 1 and part 2, part 2 is dropped. The resources are determined by using the resource offset parameters corresponding to AN and CSI respectively. If the higher layer signaling configures resource offset parameters for different priority ANs on LP PUSCH, the resource offset parameters corresponding to HP AN are used to calculate AN resources and the resource offset parameters corresponding to LP AN are used to calculate AN resources. If only one kind of resource offset parameter is configured for one kind of UCI, the priority is not needed to be distinguished, the same resource offset parameters corresponding to AN are used to calculate resources for HP AN and LP AN; or, the resource offset parameters corresponding to AN are used to calculate resources for HP AN and the resource offset parameters corresponding to CSI part1 are used to calculate resources for LP AN.
3) If replacing LP PUSCH1 with CSI with LP PUSCH1 with LP AN + LP CSI, the method in embodiment 2 is also applicable. As shown in FIG. 11, FIG. 11 is a seventh schematic implementation diagram of a method for UCI transmission according to an embodiment of the present application. The difference is that in mode 1, a part UCI in the second UCI is dropped, and the remaining portion is transmitted together with the first UCI on PUSCH, that is, the LP CSI on PUSCH is dropped, and the HP AN is transferred to PUSCH and transmitted together with the LP AN. The mode for transmitting both LP AN and HP AN on PUSCH is the same as described in 2) above.
4) If replacing HP AN with HP AN + LP AN, and replacing LP PUSCH with LP CSI with HP PUSCH with HP CSI, the method in embodiment 2 is also applicable. As shown in FIG. 12, FIG. 12 is an eighth schematic implementation diagram of a method for UCI transmission according to an embodiment of the present application. The difference is that when using mode 1, one way is to transfer both HP AN and LP AN to HP PUSCH for transmission, while dropping HP CSI on HP PUSCH, where the mode for transmitting both LP AN and HP AN on PUSCH is the same as described in 2) above; another way is to drop a part of UCI in the first UCI and transfer the remaining UCI to PUSCH for transmission with the second UCI, that is, LP AN is dropped and HP AN is transferred to HP PUSCH for transmission with HP CSI.
5) If replacing HP AN with LP AN, and replacing LP PUSCH with LP CSI with HP PUSCH with HP AN + HP CSI, the method in embodiment 2 is also applicable. As shown in FIG. 13, FIG. 13 is a ninth schematic implementation diagram of a method for UCI transmission according to an embodiment of the present application. The difference is that when using mode 1, a part of second UCI may be dropped, and the remaining UCI and the first UCI may be transmitted simultaneously on PUSCH, that is, HP CSI on PUSCH may be dropped, and LP AN may be transferred to PUSCH and transmitted together with the HP AN, where the mode for transmitting both LP AN and HP AN on PUSCH is the same as described in 2) above.
6) If replacing HP AN with LP AN + LP CSI and replacing LP PUSCH with LP CSI with HP PUSCH with HP CSI, the method in embodiment 2 is also applicable. As shown in FIG. 14, FIG. 14 is a tenth schematic implementation diagram of a method for UCI transmission according to an embodiment of the present application. The difference is that when using mode 1, one way is to drop a part of UCI in the first UCI, transfer the remaining UCI to PUSCH and transmit it together with the second UCI, that is, LP CSI is dropped, and LP AN is transferred to HP PUSCH and transmitted together with HP CSI, where AN and CSI may be transmitted on PUSCH separately according to the transmission mode of AN and CSI on PUSCH in the related art. Another way is to drop the second UCI and transfer the first UCI to PUSCH for transmission, that is, HP CSI on PUSCH is dropped and LP AN and LP CSI are transferred to PUSCH for transmission, where AN and CSI may be transmitted on PUSCH separately according to the transmission mode of AN and CSI on PUSCH in the related art. Mode 3 is a mode in which PUCCH is dropped.
7) If replacing HP AN with LP AN + LP CSI, and replacing LP PUSCH with LP CSI with HP PUSCH with HP AN + HP CSI, the method in embodiment 2 is also applicable. As shown in FIG. 15, FIG. 15 is an eleventh schematic implementation diagram of a method for UCI transmission according to an embodiment of the present application. The difference is that when using mode 1, one way is to drop a part of UCI in the first UCI, transfer the remaining UCI to PUSCH and transmit it together with the second UCI, that is, LP CSI is dropped, and LP AN is transferred to HP PUSCH and transmitted together with HP AN and HP CSI, where the mode for transmitting HP AN, LP AN and HP CSI on PUSCH is the same as described in 2) above. Another way is to drop a part of UCI in the second UCI, transfer the first UCI to PUSCH for transmission together with the remaining second UCI, that is, HP CSI on PUSCH is dropped, LP AN and LP CSI are transferred to PUSCH for transmission together with HP AN, where the mode for transmitting HP AN, LP AN and LP CSI on PUSCH is the same as described in 2) above. Mode 3 in the figure is a mode in which PUCCH is dropped.
8) If replacing HP AN with LP CSI, and replacing LP PUSCH with LP CSI with HP PUSCH with HP CSI or HP PUSCH with HP AN or HP PUSCH with HP AN + HP CSI, the method in embodiment 2 is also applicable. If the second UCI includes HP CSI, the preferred mode is to drop LP CSI, i.e., drop PUCCH; if the second UCI is HP AN, one way is to drop LP CSI, and another way is to transfer LP CSI to HP PUSCH and transmit it together with HP AN.

It should be noted that the above PUCCH and PUSCH may be all or part of the channels with corresponding PDCCH, and the PDCCH includes indication field for indicating whether multiplexing of different priorities is supported; or, may be all or part of the channels without corresponding PDCCH, or may be the channels with corresponding PDCCH but the PDCCH does not include indication field for indicating whether multiplexing of different priorities is supported. For this case, whether the corresponding PUCCH and PUSCH support multiplexing of different priorities may be determined based on the configuration of higher layer signaling. For example, a higher layer parameter is used to configure whether multiplexing transmission of different priorities is supported. When the higher layer parameter is configured as True, it is determined that any uplink channel supports multiplexing transmission of different priorities, but when it is configured as False or there is no configuration, it is determined that any uplink channel does not support multiplexing transmission of different priorities. When there is an indication field in PDCCH indicating whether to perform multiplexing of different priorities, the rule for selecting the target PUSCH may consider whether to support multiplexing of different priorities as a factor in the selection rule, and the combination relationship with other factors may be a predetermined order. In the above embodiments, HARQ-ACK is applicable to both unicast and multicast HARQ-ACK.

The methods and devices provided by the embodiments of the present application are based on the same conception, and the implementation of the devices and methods may be referred to each other since the principles of the methods and devices are similar, and are not repeated here.

FIG. 16 is a schematic structural diagram of a terminal according to an embodiment of the present application. As shown in FIG. 16, the terminal includes a memory 1620, a transceiver 1610 and a processor 1600, where the processor 1600 and memory 1620 may be physically arranged separately.

The memory 1620 is used for storing a computer program, and the transceiver 1610 is used for transmitting and receiving data under control of the processor 1600.

Specifically, the transceiver 1610 is used for transmitting and receiving data under control of the processor 1600.

In FIG. 16, a bus architecture may include any number of interconnected buses and bridges, which are linked together through various circuits of one or more processors represented by the processor 1600 and one or more memories represented by the memory 1620. The bus architecture may also link together various other circuits, such as peripherals, voltage regulators, and power management circuits, etc., which are well known in the art, and therefore are not further described in the present application. The bus interface provides an interface. The transceiver 1610 may include multiple elements, i.e., including a transmitter and a receiver, units for providing communication with various other devices over transmission media including wireless channels, wired channels, fiber optic cables, and the like. For different user equipment, a user interface 1630 may be an interface capable of externally or internally connecting the required equipment, and the connected equipment includes, but not limited to, a keypad, a display, a speaker, a microphone, a joystick, and the like.

The processor 1600 is responsible for managing the bus architecture and general processing, and the memory 1620 may store data used by the processor 1600 when performing operations.

The processor 1600 may be a central processing unit (CPU), an application specific integrated circuit (ASIC), a field-programmable gate array (FPGA), or a complex programmable logic device (CPLD), the processor may also use a multi-core architecture.

The processor 1600 calls the computer program stored in the memory 1620 to execute any of the methods applied to the terminal provided by the embodiments of the present application in accordance with the obtained executable instructions. For example, the method includes: in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and transferring the first UCI to the selected PUSCH without carrying the second UCI for transmission; or, selecting a target PUSCH for carrying the first UCI from the multiple PUSCHs, and determining a corresponding UCI transmission mode based on UCI carried on the target PUSCH, where the PUCCH and the PUSCH carrying the second UCI have different priorities, or the first UCI includes first priority UCI and the second UCI includes second priority UCI.

In an embodiment, the method includes:
in case that time domain resources of a PUCCH carrying first UCI overlap with time domain resources of multiple PUSCHs and the multiple PUSCHs include a PUSCH carrying second UCI, selecting a PUSCH without carrying the second UCI from the multiple PUSCHs preferentially, and transmitting the first UCI on the selected PUSCH without carrying the second UCI; or, selecting a target PUSCH for carrying the first UCI from the multiple PUSCHs, and determining a corresponding UCI transmission mode based on UCI carried on the target PUSCH,
where the PUCCH and the PUSCH carrying the second UCI have different priorities, or the first UCI includes first priority UCI and the second UCI includes second priority UCI.

In an embodiment, the selecting the PUSCH without carrying the second UCI preferentially includes any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

In an embodiment, the determining the corresponding UCI transmission mode based on UCI carried on the target PUSCH includes:
transferring the first UCI to the target PUSCH for transmission in case that the target PUSCH does not carry the second UCI; or,
performing transmission according to any of the following in case that the target PUSCH carries the second UCI:
   dropping the second UCI and transferring the first UCI to the target PUSCH for transmission; or,
   dropping a part of UCI in the second UCI, transferring the first UCI to the target PUSCH, and transmitting the first UCI together with remaining UCI in the second UCI; or,
   dropping a part of UCI in the first UCI, transferring remaining UCI in the first UCI to the target PUSCH, and transmitting the second UCI together with the remaining UCI in the first UCI; or,
   transferring the first UCI to the target PUSCH and transmitting the second UCI together with the first UCI; or,
   dropping the target PUSCH or dropping the PUCCH.

In an embodiment, the determining the corresponding UCI transmission mode based on UCI carried on the target PUSCH includes:
transmitting the first UCI on the target PUSCH in case that the target PUSCH does not carry the second UCI; or,
performing transmission according to any of the following in case that the target PUSCH carries the second UCI:
   dropping the second UCI and transmitting the first UCI on the target PUSCH; or,
   dropping a part of UCI in the second UCI, and transmitting the first UCI together with remaining UCI in the second UCI on the target PUSCH; or,
   dropping a part of UCI in the first UCI, and transmitting the second UCI together with the remaining UCI in the first UCI on the target PUSCH; or,
   transmitting the first UCI and the second UCI on the target PUSCH; or,
   dropping the target PUSCH or dropping the PUCCH.

In an embodiment, after dropping the target PUSCH, the method further includes:
dropping all other PUSCHs overlapping with the PUCCH in time domain resources, and transmitting the PUCCH carrying the first UCI; or,
selecting another target PUSCH for carrying the first UCI from remaining PUSCHs overlapping with the PUCCH in time domain resources, and determining the corresponding UCI transmission mode based on UCI carried on the another target PUSCH.

In an embodiment, the first UCI and the second UCI satisfy any or any combination of the following conditions:
UCI included in the first UCI and UCI included in the second UCI include UCI that does not support multiplexing transmission; or,
the first UCI includes hybrid automatic repeat request-ACKnowledgment (HARQ-ACK) and/or channel state information (CSI), and the second UCI includes HARQ-ACK and/or CSI.

In an embodiment, in case that UCIs carried on the PUCCH have different priorities, a priority of the PUCCH is high priority or a third priority; or,
in case that UCIs carried on the PUSCH have different priorities, a priority of the PUSCH is high priority or a third priority,
where the third priority is a priority type other than high priority and low priority.

In an embodiment, the multiple PUSCHs are PUSCHs unable to be transmitted simultaneously with the PUCCH.

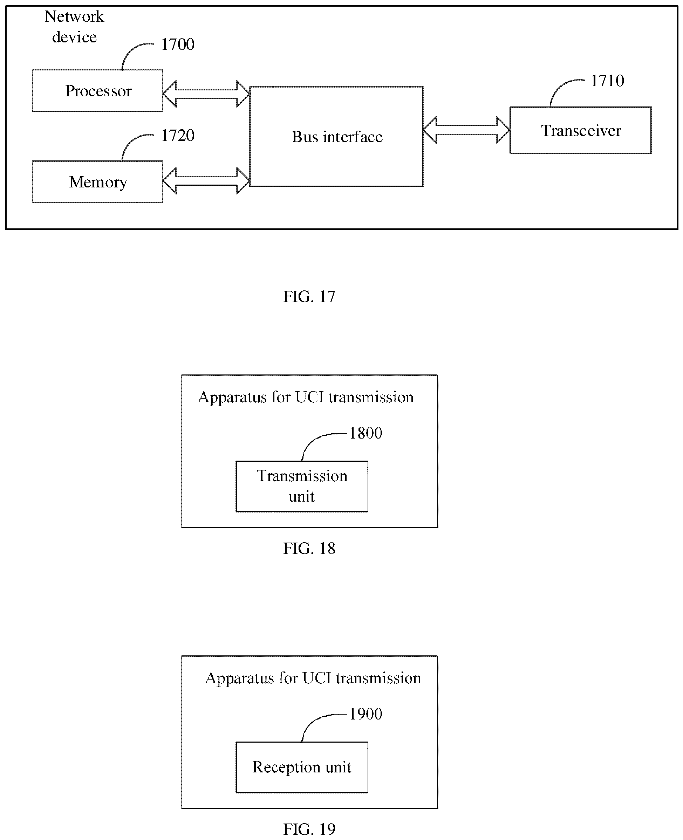

FIG. 17 is a schematic structural diagram of a network device according to an embodiment of the present application. As shown in FIG. 17, the network device includes a memory 1720, a transceiver 1710 and a processor 1700, where the processor 1700 and memory 1720 may be physically arranged separately.

The memory 1720 is used for storing a computer program, and the transceiver 1710 is used for transmitting and receiving data under control of the processor 1700.

Specifically, the transceiver 1710 is used for transmitting and receiving data under control of the processor 1700.

In FIG. 17, a bus architecture may include any number of interconnected buses and bridges, which are linked together through various circuits of one or more processors represented by the processor 1700 and one or more memories represented by the memory 1720. The bus architecture may also link together various other circuits, such as peripherals, voltage regulators, and power management circuits, etc., which are well known in the art, and therefore are not further described in the present application. The bus interface provides an interface. The transceiver 1710 may include multiple elements, i.e., including a transmitter and a receiver, units for providing communication with various other devices over transmission media including wireless channels, wired channels, fiber optic cables, and the like.

The processor 1700 is responsible for managing the bus architecture and general processing, and the memory 1720 may store data used by the processor 1700 when performing operations.

The processor 1700 may be a central processing unit (CPU), an application specific integrated circuit (ASIC), a field-programmable gate array (FPGA), or a complex programmable logic device (CPLD), the processor may also use a multi-core architecture.

The processor 1700 calls the computer program stored in the memory 1720 to execute any of the methods applied to the terminal provided by the embodiments of the present application in accordance with the obtained executable instructions. For example, the method includes: in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and receiving the first UCI on the selected PUSCH without carrying the second UCI; or, selecting a target PUSCH for carrying the first UCI from the multiple PUSCHs, and determining a corresponding UCI reception mode based on UCI carried on the target PUSCH, where the PUCCH and the PUSCH carrying the second UCI have different priorities, or the first UCI includes first priority UCI and the second UCI includes second priority UCI.

In an embodiment, the selecting the PUSCH without carrying the second UCI preferentially includes any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

In an embodiment, the determining the corresponding UCI reception mode based on UCI carried on the target PUSCH includes:
receiving the first UCI on the target PUSCH in case that the target PUSCH does not carry the second UCI; or,
performing reception according to any of the following in case that the target PUSCH carries the second UCI:
   determining that the second UCI is dropped and receiving the first UCI on the target PUSCH; or,
   determining that a part of UCI in the second UCI is dropped and receiving the first UCI together with remaining UCI in the second UCI on the target PUSCH; or,
   determining that a part of UCI in the first UCI is dropped and receiving the second UCI together with remaining UCI in the first UCI on the target PUSCH; or
   receiving the first UCI and the second UCI on the target PUSCH; or,
   determining that the target PUSCH is dropped; or,
   determining that the PUCCH is dropped.

In an embodiment, after determining that the target PUSCH is dropped, the method further includes:
determining that all other PUSCHs overlapping with the PUCCH in time domain resources are dropped and receiving the PUCCH carrying the first UCI; or,
selecting another target PUSCH for carrying the first UCI from remaining PUSCHs overlapping with the PUCCH in time domain resources, and determining the corresponding UCI reception mode based on UCI carried on the another target PUSCH.

In an embodiment, the first UCI and the second UCI satisfy any or any combination of the following conditions:
UCI included in the first UCI and UCI included in the second UCI include UCI that does not support multiplexing transmission; or,
the first UCI includes hybrid automatic repeat request-ACKnowledgment (HARQ-ACK) and/or channel state information (CSI), and the second UCI includes HARQ-ACK and/or CSI.

In an embodiment, in case that UCIs carried on the PUCCH have different priorities, a priority of the PUCCH is high priority or a third priority; or,
in case that UCIs carried on the PUSCH have different priorities, a priority of the PUSCH is high priority or a third priority,
where the third priority is a priority type other than high priority and low priority.

In an embodiment, the multiple PUSCHs are PUSCHs unable to be transmitted simultaneously with the PUCCH.

It should be noted here that the above terminal and network device provided by the embodiments of the present application may implement all the method steps implemented by the above method embodiments, and may achieve the same effect. The same parts and beneficial effects as the same method embodiments are not repeated in the present application.

FIG. 18 is a first schematic structural diagram of an apparatus for UCI transmission according to an embodiment of the present application, and the apparatus may be applied to a terminal. As shown in FIG. 18, the apparatus includes:
a transmission unit 1800, used for in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and transferring the first UCI to the selected PUSCH without carrying the second UCI for transmission; or, selecting a target PUSCH for carrying the first UCI from the multiple PUSCHs, and determining a corresponding UCI transmission mode based on UCI carried on the target PUSCH,
where the PUCCH and the PUSCH carrying the second UCI have different priorities, or the first UCI includes first priority UCI and the second UCI includes second priority UCI.

In an embodiment, the apparatus includes:
a transmission unit 1800, used for in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and transmitting the first UCI on the selected PUSCH without carrying the second UCI; or, selecting a target PUSCH for carrying the first UCI from the multiple PUSCHs, and determining a corresponding UCI transmission mode based on UCI carried on the target PUSCH,
where the PUCCH and the PUSCH carrying the second UCI have different priorities, or the first UCI includes first priority UCI and the second UCI includes second priority UCI.

In an embodiment, the selecting the PUSCH without carrying the second UCI preferentially includes any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

In an embodiment, the determining the corresponding UCI transmission mode based on UCI carried on the target PUSCH includes:
transferring the first UCI to the target PUSCH for transmission in case that the target PUSCH does not carry the second UCI; or,
performing transmission according to any of the following in case that the target PUSCH carries the second UCI:
   dropping the second UCI and transferring the first UCI to the target PUSCH for transmission; or,
   dropping a part of UCI in the second UCI, transferring the first UCI to the target PUSCH, and transmitting the first UCI together with remaining UCI in the second UCI; or,
   dropping a part of UCI in the first UCI, transferring remaining UCI in the first UCI to the target PUSCH, and transmitting the second UCI together with the remaining UCI in the first UCI; or,
   transferring the first UCI to the target PUSCH and transmitting the second UCI together with the first UCI; or,
   dropping the target PUSCH or dropping the PUCCH.

In an embodiment, the determining the corresponding UCI transmission mode based on UCI carried on the target PUSCH includes:
transmitting the first UCI on the target PUSCH in case that the target PUSCH does not carry the second UCI; or,
performing transmission according to any of the following in case that the target PUSCH carries the second UCI:
   dropping the second UCI and transmitting the first UCI on the target PUSCH; or,
   dropping a part of UCI in the second UCI, and transmitting the first UCI together with remaining UCI in the second UCI on the target PUSCH; or,
   dropping a part of UCI in the first UCI, and transmitting the second UCI together with the remaining UCI in the first UCI on the target PUSCH; or,
   transmitting the first UCI and the second UCI on the target PUSCH; or,
   dropping the target PUSCH or dropping the PUCCH.

In an embodiment, after dropping the target PUSCH, the transmission unit 1800 is further used for:
dropping all other PUSCHs overlapping with the PUCCH in time domain resources, and transmitting the PUCCH carrying the first UCI; or,
selecting another target PUSCH for carrying the first UCI from remaining PUSCHs overlapping with the PUCCH in time domain resources, and determining the corresponding UCI transmission mode based on UCI carried on the another target PUSCH.

In an embodiment, the first UCI and the second UCI satisfy any or any combination of the following conditions:
UCI included in the first UCI and UCI included in the second UCI include UCI that does not support multiplexing transmission; or,
the first UCI includes hybrid automatic repeat request-ACKnowledgment (HARQ-ACK) and/or channel state information (CSI), and the second UCI includes HARQ-ACK and/or CSI.

In an embodiment, in case that UCIs carried on the PUCCH have different priorities, a priority of the PUCCH is high priority or a third priority; or,
in case that UCIs carried on the PUSCH have different priorities, a priority of the PUSCH is high priority or a third priority,
where the third priority is a priority type other than high priority and low priority.

In an embodiment, the multiple PUSCHs are PUSCHs unable to be transmitted simultaneously with the PUCCH.

FIG. 19 is a second schematic structural diagram of an apparatus for UCI transmission according to an embodiment of the present application, and the apparatus may be applied to a network device. As shown in FIG. 19, the apparatus includes:
a reception unit 1900, used for in case that time domain resources of a physical uplink control channel (PUCCH) carrying first UCI overlap with time domain resources of multiple physical uplink shared channels (PUSCHs) and the multiple PUSCHs include a PUSCH carrying second UCI, selecting a PUSCH without carrying the second UCI from the multiple PUSCHs preferentially, and receiving the first UCI on the selected PUSCH without carrying the second UCI; or, selecting a target PUSCH for carrying the first UCI from the multiple PUSCHs, and determining a corresponding UCI reception mode based on UCI carried on the target PUSCH,
where the PUCCH and the PUSCH carrying the second UCI have different priorities, or the first UCI includes first priority UCI and the second UCI includes second priority UCI.

In an embodiment, the selecting the PUSCH without carrying the second UCI preferentially includes any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

In an embodiment, the determining the corresponding UCI reception mode based on UCI carried on the target PUSCH includes:
receiving the first UCI on the target PUSCH in case that the target PUSCH does not carry the second UCI; or,
performing reception according to any of the following in case that the target PUSCH carries the second UCI:
   determining that the second UCI is dropped and receiving the first UCI on the target PUSCH; or,
   determining that a part of UCI in the second UCI is dropped and receiving the first UCI together with remaining UCI in the second UCI on the target PUSCH; or,
   determining that a part of UCI in the first UCI is dropped and receiving the second UCI together with remaining UCI in the first UCI on the target PUSCH; or
   receiving the first UCI and the second UCI on the target PUSCH; or,
   determining that the target PUSCH is dropped; or,
   determining that the PUCCH is dropped.

In an embodiment, after determining that the target PUSCH is dropped, the reception unit 1900 is further used for:
determining that all other PUSCHs overlapping with the PUCCH in time domain resources are dropped and receiving the PUCCH carrying the first UCI; or,
selecting another target PUSCH for carrying the first UCI from remaining PUSCHs overlapping with the PUCCH in time domain resources, and determining the corresponding UCI reception mode based on UCI carried on the another target PUSCH.

In an embodiment, the first UCI and the second UCI satisfy any or any combination of the following conditions:
UCI included in the first UCI and UCI included in the second UCI include UCI that does not support multiplexing transmission; or,
the first UCI includes hybrid automatic repeat request-ACKnowledgment (HARQ-ACK) and/or channel state information (CSI), and the second UCI includes HARQ-ACK and/or CSI.

In an embodiment, in case that UCIs carried on the PUCCH have different priorities, a priority of the PUCCH is high priority or a third priority; or,
in case that UCIs carried on the PUSCH have different priorities, a priority of the PUSCH is high priority or a third priority,
where the third priority is a priority type other than high priority and low priority.

In an embodiment, the multiple PUSCHs are PUSCHs unable to be transmitted simultaneously with the PUCCH.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above apparatus according to the embodiments of the present application may implement all the method steps implemented by the above method embodiments, and may achieve the same effect. The same parts and beneficial effects as the same method embodiments are not repeated here.

An embodiment of the present application further provides a computer readable storage medium storing a computer program that cause a computer to perform the steps of the method for UCI transmission described above.

It should be noted here that the computer readable storage medium according to the embodiments of the present application may implement all the method steps implemented by the above method embodiments, and may achieve the same effect. The same parts and beneficial effects as the same method embodiments are not repeated here.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for uplink control information (UCI) transmission, performed by a terminal, comprising:
in case that time domain resources of a physical uplink control channel (PUCCH) carrying first UCI overlap with time domain resources of multiple physical uplink shared channels (PUSCHs) and the multiple PUSCHs comprise a PUSCH carrying second UCI,
selecting a PUSCH without carrying the second UCI from the multiple PUSCHs preferentially, and transmitting the first UCI on the selected PUSCH without carrying the second UCI; or, selecting a target PUSCH for carrying the first UCI from the multiple PUSCHs, and determining a corresponding UCI transmission mode based on UCI carried on the target PUSCH,
wherein the PUCCH and the PUSCH carrying the second UCI have different priorities, or the first UCI comprises first priority UCI and the second UCI comprises second priority UCI.

2. The method of claim 1, wherein selecting the PUSCH without carrying the second UCI preferentially comprises any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

3. The method of claim 1, wherein determining the corresponding UCI transmission mode based on UCI carried on the target PUSCH comprises:
transmitting the first UCI on the target PUSCH in case that the target PUSCH does not carry the second UCI; or,
performing transmission according to any of the following in case that the target PUSCH carries the second UCI:
dropping the second UCI and transmitting the first UCI on the target PUSCH; or,
dropping a part of UCI in the second UCI, and transmitting the first UCI together with remaining UCI in the second UCI on the target PUSCH; or,
dropping a part of UCI in the first UCI, and transmitting the second UCI together with the remaining UCI in the first UCI on the target PUSCH; or,
transmitting the first UCI and the second UCI on the target PUSCH; or,
dropping the target PUSCH; or,
dropping the PUCCH.

4. The method of claim 3, wherein after dropping the target PUSCH, the method further comprises:
dropping all other PUSCHs overlapping with the PUCCH in time domain resources, and transmitting the PUCCH carrying the first UCI; or,
selecting another target PUSCH for carrying the first UCI from remaining PUSCHs overlapping with the PUCCH in time domain resources, and determining the corresponding UCI transmission mode based on UCI carried on the another target PUSCH.

5. The method of any of claims 1 to 4, wherein the first UCI and the second UCI satisfy any or any combination of the following conditions:
UCI comprised in the first UCI and UCI comprised in the second UCI comprise UCI that does not support multiplexing transmission; or,
the first UCI comprises hybrid automatic repeat request-ACKnowledgment (HARQ-ACK) and/or channel state information (CSI), and the second UCI comprises HARQ-ACK and/or CSI.

6. The method of claim 1, wherein in case that UCIs carried on the PUCCH have different priorities, a priority of the PUCCH is high priority or a third priority; or,
in case that UCIs carried on the PUSCH have different priorities, a priority of the PUSCH is high priority or a third priority,
wherein the third priority is a priority type other than high priority and low priority.

7. The method of claim 1, wherein the multiple PUSCHs are PUSCHs unable to be transmitted simultaneously with the PUCCH.

8. A method for uplink control information (UCI) transmission, performed by a network device, comprising:
in case that time domain resources of a physical uplink control channel (PUCCH) carrying first UCI overlap with time domain resources of multiple physical uplink shared channels (PUSCHs) and the multiple PUSCHs comprise a PUSCH carrying second UCI,
selecting a PUSCH without carrying the second UCI from the multiple PUSCHs preferentially, and receiving the first UCI on the selected PUSCH without carrying the second UCI; or, selecting a target PUSCH for carrying the first UCI from the multiple PUSCHs, and determining a corresponding UCI reception mode based on UCI carried on the target PUSCH,
wherein the PUCCH and the PUSCH carrying the second UCI have different priorities, or the first UCI comprises first priority UCI and the second UCI comprises second priority UCI.

9. The method of claim 8, wherein selecting the PUSCH without carrying the second UCI preferentially comprises any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

10. The method of claim 8, wherein determining the corresponding UCI reception mode based on UCI carried on the target PUSCH comprises:
receiving the first UCI on the target PUSCH in case that the target PUSCH does not carry the second UCI; or,
performing reception according to any of the following in case that the target PUSCH carries the second UCI:
determining that the second UCI is dropped and receiving the first UCI on the target PUSCH; or,
determining that a part of UCI in the second UCI is dropped and receiving the first UCI together with remaining UCI in the second UCI on the target PUSCH; or,
determining that a part of UCI in the first UCI is dropped and receiving the second UCI together with remaining UCI in the first UCI on the target PUSCH; or
receiving the first UCI and the second UCI on the target PUSCH; or,
determining that the target PUSCH is dropped; or,
determining that the target PUCCH is dropped.

11. The method of claim 10, wherein after determining that the target PUSCH is dropped, the method further comprises:
determining that all other PUSCHs overlapping with the PUCCH in time domain resources are dropped and receiving the PUCCH carrying the first UCI; or,
selecting another target PUSCH for carrying the first UCI from remaining PUSCHs overlapping with the PUCCH in time domain resources, and determining the corresponding UCI reception mode based on UCI carried on the another target PUSCH.

12. The method of any of claims 8 to 11, wherein the first UCI and the second UCI satisfy any or any combination of the following conditions:
UCI comprised in the first UCI and UCI comprised in the second UCI comprise UCI that does not support multiplexing transmission; or,
the first UCI comprises hybrid automatic repeat request-ACKnowledgment (HARQ-ACK) and/or channel state information (CSI), and the second UCI comprises HARQ-ACK and/or CSI.

13. The method of claim 8, wherein in case that UCIs carried on the PUCCH have different priorities, a priority of the PUCCH is high priority or a third priority; or,
in case that UCIs carried on the PUSCH have different priorities, a priority of the PUSCH is high priority or a third priority,
wherein the third priority is a priority type other than high priority and low priority.

14. The method of claim 8, wherein the multiple PUSCHs are PUSCHs unable to be transmitted simultaneously with the PUCCH.

15. A terminal, comprising a memory, a transceiver and a processor,
wherein the memory is used for storing a computer program, the transceiver is used for transmitting and receiving data under control of the processor, and the processor is used for reading the computer program in the memory and performing the following operations of:
in case that time domain resources of a physical uplink control channel (PUCCH) carrying first UCI overlap with time domain resources of multiple physical uplink shared channels (PUSCHs) and the multiple PUSCHs comprise a PUSCH carrying second UCI, selecting a PUSCH without carrying the second UCI from the multiple PUSCHs preferentially, and transmitting the first UCI on the selected PUSCH without carrying the second UCI; or, selecting a target PUSCH for carrying the first UCI from the multiple PUSCHs, and determining a corresponding UCI transmission mode based on UCI carried on the target PUSCH,
wherein the PUCCH and the PUSCH carrying the second UCI have different priorities, or the first UCI comprises first priority UCI and the second UCI comprises second priority UCI.

16. The terminal of claim 15, wherein selecting the PUSCH without carrying the second UCI preferentially comprises any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

17. The terminal of claim 15, wherein determining the corresponding UCI transmission mode based on UCI carried on the target PUSCH comprises:
transmitting the first UCI on the target PUSCH in case that the target PUSCH does not carry the second UCI; or,
performing transmission according to any of the following in case that the target PUSCH carries the second UCI:
dropping the second UCI and transmitting the first UCI on the target PUSCH; or,
dropping a part of UCI in the second UCI, and transmitting the first UCI together with remaining UCI in the second UCI on the target PUSCH; or,
dropping a part of UCI in the first UCI, and transmitting the second UCI together with the remaining UCI in the first UCI on the target PUSCH; or,
transmitting the first UCI and the second UCI on the target PUSCH; or,
dropping the target PUSCH; or,
dropping the PUCCH.

18. The terminal of claim 17, wherein after dropping the target PUSCH, the operations further comprise:
dropping all other PUSCHs overlapping with the PUCCH in time domain resources, and transmitting the PUCCH carrying the first UCI; or,
selecting another target PUSCH for carrying the first UCI from remaining PUSCHs overlapping with the PUCCH in time domain resources, and determining the corresponding UCI transmission mode based on UCI carried on the another target PUSCH.

19. The terminal of any of claims 15 to 18, wherein the first UCI and the second UCI satisfy any or any combination of the following conditions:
UCI comprised in the first UCI and UCI comprised in the second UCI comprise UCI that does not support multiplexing transmission; or,
the first UCI comprises one or more of hybrid automatic repeat request-ACKnowledgment (HARQ-ACK) and/or channel state information (CSI), and the second UCI comprises one or more of HARQ-ACK and/or CSI.

20. The terminal of claim 15, wherein in case that UCIs carried on the PUCCH have different priorities, a priority of the PUCCH is high priority or a third priority; or,
in case that UCIs carried on the PUSCH have different priorities, a priority of the PUSCH is high priority or a third priority,
wherein the third priority is a priority type other than high priority and low priority.

21. The terminal of claim 15, wherein the multiple PUSCHs are PUSCHs unable to be transmitted simultaneously with the PUCCH.

22. A network device, comprising a memory, a transceiver and a processor,
wherein the memory is used for storing a computer program, the transceiver is used for transmitting and receiving data under control of the processor, and the processor is used for reading the computer program in the memory and performing the following operations of:
in case that time domain resources of a physical uplink control channel (PUCCH) carrying first UCI overlap with time domain resources of multiple physical uplink shared channels (PUSCHs) and the multiple PUSCHs comprise a PUSCH carrying second UCI, selecting a PUSCH without carrying the second UCI from the multiple PUSCHs preferentially, and receiving the first UCI on the selected PUSCH without carrying the second UCI; or, selecting a target PUSCH for carrying the first UCI from the multiple PUSCHs, and determining a corresponding UCI reception mode based on UCI carried on the target PUSCH,
wherein the PUCCH and the PUSCH carrying the second UCI have different priorities, or the first UCI comprises first priority UCI and the second UCI comprises second priority UCI.

23. The network device of claim 22, wherein selecting the PUSCH without carrying the second UCI preferentially comprises any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

24. The network device of claim 22, wherein determining the corresponding UCI reception mode based on UCI carried on the target PUSCH comprises:
receiving the first UCI on the target PUSCH in case that the target PUSCH does not carry the second UCI; or,
performing reception according to any of the following in case that the target PUSCH carries the second UCI:
determining that the second UCI is dropped and receiving the first UCI on the target PUSCH; or,
determining that a part of UCI in the second UCI is dropped and receiving the first UCI together with remaining UCI in the second UCI on the target PUSCH; or,
determining that a part of UCI in the first UCI is dropped and receiving the second UCI together with remaining UCI in the first UCI on the target PUSCH; or
receiving the first UCI and the second UCI on the target PUSCH; or,
determining that the target PUSCH is dropped; or,
determining that the PUCCH is dropped.

25. The network device of claim 24, wherein after determining that the target PUSCH is dropped, the operations further comprise:
determining that all other PUSCHs overlapping with the PUCCH in time domain resources are dropped and receiving the PUCCH carrying the first UCI; or,
selecting another target PUSCH for carrying the first UCI from remaining PUSCHs overlapping with the PUCCH in time domain resources, and determining the corresponding UCI reception mode based on UCI carried on the another target PUSCH.

26. The network device of any of claims 22 to 25, wherein the first UCI and the second UCI satisfy any or any combination of the following conditions:
UCI comprised in the first UCI and UCI comprised in the second UCI comprise UCI that does not support multiplexing transmission; or,
the first UCI comprises one or more of hybrid automatic repeat request-ACKnowledgment (HARQ-ACK) and/or channel state information (CSI), and the second UCI comprises one or more of HARQ-ACK and/or CSI.

27. The network device of claim 22, wherein in case that UCIs carried on the PUCCH have different priorities, a priority of the PUCCH is high priority or a third priority; or,
in case that UCIs carried on the PUSCH have different priorities, a priority of the PUSCH is high priority or a third priority,
wherein the third priority is a priority type other than high priority and low priority.

28. The network device of claim 22, wherein the multiple PUSCHs are PUSCHs unable to be transmitted simultaneously with the PUCCH.

29. An apparatus for uplink control information (UCI) transmission, applied to a terminal, comprising:
a transmission unit, used for in case that time domain resources of a physical uplink control channel (PUCCH) carrying first UCI overlap with time domain resources of multiple physical uplink shared channels (PUSCHs) and the multiple PUSCHs comprise a PUSCH carrying second UCI,
selecting a PUSCH without carrying the second UCI from the multiple PUSCHs preferentially, and transmitting the first UCI on the selected PUSCH without carrying the second UCI; or, selecting a target PUSCH for carrying the first UCI from the multiple PUSCHs, and determining a corresponding UCI transmission mode based on UCI carried on the target PUSCH,
wherein the PUCCH and the PUSCH carrying the second UCI have different priorities, or the first UCI comprises first priority UCI and the second UCI comprises second priority UCI.

30. The apparatus of claim 29, wherein selecting the PUSCH without carrying the second UCI preferentially comprises any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

31. The apparatus of claim 29, wherein determining the corresponding UCI transmission mode based on UCI carried on the target PUSCH comprises:
transmitting the first UCI on the target PUSCH in case that the target PUSCH does not carry the second UCI; or,
performing transmission according to any of the following in case that the target PUSCH carries the second UCI:
dropping the second UCI and transmitting the first UCI on the target PUSCH; or,
dropping a part of UCI in the second UCI, and transmitting the first UCI together with remaining UCI in the second UCI on the target PUSCH; or,
dropping a part of UCI in the first UCI, and transmitting the second UCI together with the remaining UCI in the first UCI on the target PUSCH; or,
transmitting the first UCI and the second UCI on the target PUSCH; or,
dropping the target PUSCH; or,
dropping the PUCCH.

32. The apparatus of claim 31, wherein after dropping the target PUSCH, the transmission unit is further used for:
dropping all other PUSCHs overlapping with the PUCCH in time domain resources, and transmitting the PUCCH carrying the first UCI; or,
selecting another target PUSCH for carrying the first UCI from remaining PUSCHs overlapping with the PUCCH in time domain resources, and determining the corresponding UCI transmission mode based on UCI carried on the another target PUSCH.

33. The apparatus of any of claims 29 to 32, wherein the first UCI and the second UCI satisfy any or any combination of the following conditions:
UCI comprised in the first UCI and UCI comprised in the second UCI comprise UCI that does not support multiplexing transmission; or,
the first UCI comprises one or more of hybrid automatic repeat request-ACKnowledgment (HARQ-ACK) and/or channel state information (CSI), and the second UCI comprises one or more of HARQ-ACK and/or CSI.

34. The apparatus of claim 29, wherein in case that UCIs carried on the PUCCH have different priorities, a priority of the PUCCH is high priority or a third priority; or,
in case that UCIs carried on the PUSCH have different priorities, a priority of the PUSCH is high priority or a third priority,
wherein the third priority is a priority type other than high priority and low priority.

35. The apparatus of claim 29, wherein the multiple PUSCHs are PUSCHs unable to be transmitted simultaneously with the PUCCH.

36. An apparatus for uplink control information (UCI) transmission, applied to a network device, comprising:
a reception unit, used for in case that time domain resources of a physical uplink control channel (PUCCH) carrying first UCI overlap with time domain resources of multiple physical uplink shared channels (PUSCHs) and the multiple PUSCHs comprise a PUSCH carrying second UCI,
selecting a PUSCH without carrying the second UCI from the multiple PUSCHs preferentially, and receiving the first UCI on the selected PUSCH without carrying the second UCI; or, selecting a target PUSCH for carrying the first UCI from the multiple PUSCHs, and determining a corresponding UCI reception mode based on UCI carried on the target PUSCH,
wherein the PUCCH and the PUSCH carrying the second UCI have different priorities, or the first UCI comprises first priority UCI and the second UCI comprises second priority UCI.

37. The apparatus of claim 36, wherein selecting the PUSCH without carrying the second UCI preferentially comprises any of the following:
a combination of selecting the PUSCH without carrying the second UCI preferentially and selecting a PUSCH with a same priority as the PUCCH preferentially; or
a combination of selecting the PUSCH without carrying the second UCI preferentially and selecting a PUSCH supporting multiplexing transmission of different priorities preferentially; or
a combination of selecting the PUSCH without carrying the second UCI preferentially, selecting a PUSCH with a same priority as the PUCCH preferentially, and selecting a PUSCH supporting multiplexing transmission of different priorities preferentially.

38. The apparatus of claim 36, wherein determining the corresponding UCI reception mode based on UCI carried on the target PUSCH comprises:
receiving the first UCI on the target PUSCH in case that the target PUSCH does not carry the second UCI; or,
performing reception according to any of the following in case that the target PUSCH carries the second UCI:
determining that the second UCI is dropped and receiving the first UCI on the target PUSCH; or,
determining that a part of UCI in the second UCI is dropped and receiving the first UCI together with remaining UCI in the second UCI on the target PUSCH; or,
determining that a part of UCI in the first UCI is dropped and receiving the second UCI together with remaining UCI in the first UCI on the target PUSCH; or
receiving the first UCI and the second UCI on the target PUSCH; or,
determining that the target PUSCH is dropped; or,
determining that the PUCCH is dropped.

39. The apparatus of claim 38, wherein after determining that the target PUSCH is dropped, the reception unit is further used for:
determining that all other PUSCHs overlapping with the PUCCH in time domain resources are dropped and receiving the PUCCH carrying the first UCI; or,
selecting another target PUSCH for carrying the first UCI from remaining PUSCHs overlapping with the PUCCH in time domain resources, and determining the corresponding UCI reception mode based on UCI carried on the another target PUSCH.

40. The apparatus of any of claims 36 to 39, wherein the first UCI and the second UCI satisfy any or any combination of the following conditions:
UCI comprised in the first UCI and UCI comprised in the second UCI comprise UCI that does not support multiplexing transmission; or,
the first UCI comprises one or more of hybrid automatic repeat request-ACKnowledgment (HARQ-ACK) and/or channel state information (CSI), and the second UCI comprises one or more of HARQ-ACK and/or CSI.

41. The apparatus of claim 36, wherein in case that UCIs carried on the PUCCH have different priorities, a priority of the PUCCH is high priority or a third priority; or,
in case that UCIs carried on the PUSCH have different priorities, a priority of the PUSCH is high priority or a third priority,
wherein the third priority is a priority type other than high priority and low priority.

42. The apparatus of claim 36, wherein the multiple PUSCHs are PUSCHs unable to be transmitted simultaneously with the PUCCH.

43. A computer readable storage medium storing a computer program that causes a computer to perform the method of any of claims 1 to 7, or perform the method of any of claims 8 to 14.
